# EUROPÄISCHE PATENTSCHRIFT

(11) **EP 3 265 499 B1**
(45) Veröffentlichungstag und Bekanntmachung des Hinweises auf die Patenterteilung: **30.01.2019**
(21) Anmeldenummer: 16706212.4
(22) Anmeldetag: 25.02.2016
(51) Int. Cl.: C08G 18/48, C08G 18/72, C08G 18/75, C08G 18/78, C08G 18/79, C08G 18/10, C09J 163/00

(54) **VERBESSERTE TIEFTEMPERATURSCHLAGZÄHIGKEIT IN PTMEG BASIERENDEN POLYURETHAN-SCHLAGZÄHIGKEITSMODIFIKATOREN**
IMPROVED LOW TEMPERATURE IMPACT STRENGTH IN PTMEG BASED POLYURETHANE IMPACT STRENGTH MODIFIERS
RÉSISTANCE AUX CHOCS À HAUTE TEMPÉRATURE DANS DES MODIFICATEURS DE RÉSISTANCE AUX CHOCS EN POLYURÉTHANE À BASE DE PTMEG

(30) Priorität: 04.03.2015 EP 15157537
(43) Veröffentlichungstag der Anmeldung: 10.01.2018
(73) Patentinhaber: Sika Technology AG, 6340 Baar (CH)
(72) Erfinder: KRÜGER, Christian, 8049 Zürich (CH); RHEINEGGER, Urs, 8105 Regensdorf (CH)
(74) Vertreter: Sika Patent Attorneys
(86) Internationale Anmeldenummer: PCT/EP2016/053956
(87) Internationale Veröffentlichungsnummer: WO 2016/139117

(56) Entgegenhaltungen:
- EP-A1- 1 728 825
- EP-A1- 2 060 592
- EP-A1- 2 365 011
- WO-A1-2014/044851

## Beschreibung

### Technisches Gebiet

Die Erfindung betrifft Schlagzähigkeitsmodifikatoren für Epoxidharz basierte Klebstoffe, insbesondere Epoxidharz basierte strukturelle Klebstoffe.

### Stand der Technik

Die Klebstoffe für den Rohbau sollen im Fall von 1K Klebstoffen unter den üblichen Einbrennbedingungen von idealerweise 30 Min. bei 180 °C aushärten. Im Fall von 2K Klebstoffen soll die Aushärtung bei Raumtemperatur im Lauf von einigen Tagen bis ca. 1 Woche erfolgen aber auch ein beschleunigtes Aushärtungsregime wie z. B. 4h RT gefolgt von 30 min 60°C oder 85°C soll anwendbar sein. Des Weiteren sollen sie aber auch bis etwa 220 °C beständig sein. Weitere Anforderungen für einen solchen gehärteten Klebstoff beziehungsweise der Verklebung sind die Gewährleistung der Betriebssicherheit sowohl bei hohen Temperaturen bis etwa 90 °C als auch bei tiefen Temperaturen bis etwa -40 °C. Da es sich bei diesen Klebstoffen insbesondere um strukturelle Klebstoffe handelt und deshalb diese Klebstoffe strukturelle Teile verkleben, sind eine hohe Festigkeit und Schlagzähigkeit des Klebstoffes von größter Wichtigkeit.

Herkömmliche Epoxidklebstoffe zeichnen sich zwar durch eine hohe mechanische Festigkeit, insbesondere eine hohe Zugfestigkeit aus. Bei schlagartiger Beanspruchung der Verklebung sind klassische Epoxidklebstoffe jedoch meist zu spröde und können deshalb unter Crashbedingungen, bei denen sowohl große Zug- als auch Schälbeanspruchungen auftreten, den Anforderungen, insbesondere der Automobilindustrie, bei weitem nicht genügen. Ungenügend sind diesbezüglich oft besonders die Festigkeiten bei hohen, insbesondere aber bei tiefen Temperaturen (z.B. < -10 °C).

Ein Schlagzähigkeitsmodifikator, der auch als Toughener bezeichnet wird, ist in Strukturklebern einer der wichtigsten Formulierungsbestandteile. Er beeinflusst entscheidend wichtige Kenngrößen wie Schlagzähigkeit, Alterungsbeständigkeit, Haftung, ja eigentlich alle physikalischen Eigenschaften.

EP 2 060 592 A1 beschreibt wie EP 2 365 011 A1, WO 20014/044851 und EP 1 728 825 A1 Schlagzähigkeitsmodifikatoren für Epoxidharze auf Basis polytetramethylenglykol-basierter Polyurethane, deren terminale Isocyanatgruppen beispielsweise mit Cardanol blockiert worden sind.

Es ist bereits eine breite Palette von Schlagzähigkeitsmodifikatoren für Epoxidharze bekannt. Dabei handelt es sich hauptsächlich um flüssige Copolymere oder vorgeformte Core-Shell Partikel. Ein wichtiger Typ von Schlagzähigkeitsmodifikatoren sind blockierte Polyurethan-Toughenerpolymere als Schlüsselkomponenten für crashfeste strukturelle Klebstoffe. Eine besondere Herausforderung liegt hierbei im Erzielen einer ausreichenden Schlagzähigkeit bei tiefen Temperaturen.

Oftmals ist die Schlagzähigkeit, insbesondere die Tieftemperaturschlagzähigkeit, die mit Polyurethantoughenern erzielt werden kann, aber nicht ausreichend, so dass Polyurethan-Toughenerpolymere meist in Kombination mit CTBN (Carboxylterminated acrylonitrile butadiene)-Addukten eingesetzt werden. Nachteilig ist hierbei u.a. der relativ hohe Preis der eingesetzten CTBN-Addukte.

### Darstellung der Erfindung

Die Aufgabe der vorliegenden Erfindung bestand daher in der Bereitstellung von Schlagzähigkeitsmodifikatoren, die die vorstehend beschriebenen Probleme des Standes der Technik überwinden. Insbesondere sollten Schlagzähigkeitsmodifikatoren für Epoxidharz-Zusammensetzungen bereitgestellt werden, die eine gute Tieftemperatur-Schlagzähigkeit aufweisen, wobei der Einsatz von speziellen teuren Zusatzkomponenten und die damit verbundenen Problemen möglichst weitgehend vermieden werden können.

Es wurde überraschenderweise gefunden, dass der anteilige Einsatz höherfunktioneller Polyisocyanate die Schlagzähigkeit, insbesondere die Tieftemperatur-Schlagzähigkeit, von Homo PTMEG basierten Polyurethan-Toughenern deutlich verbessern kann.

Die Erfindung betrifft daher einen Schlagzähigkeitsmodifikator, welcher ein Isocyanat-terminiertes Polymer ist, dessen Isocyanatgruppen durch Umsetzung mit einem Blockierungsmittel teilweise oder vollständig blockiert sind, wobei das Isocyanat-terminierte Polymer ein Reaktionsprodukt von
a) einem oder mehreren Polyolen umfassend Polytetramethylenetherglycol in einem Anteil von mindestens 95 Gew.-%, bezogen auf das Gesamtgewicht der Polyole, und
b) zwei oder mehr Polyisocyanaten, die mindestens ein Diisocyanat und mindestens ein Polyisocyanat mit einer mittleren Isocyanatfunktionalität von 2,5 oder mehr umfassen,
ist, wobei das molare Verhältnis von Isocyanatgruppen des oder der Diisocyanate zu Isocyanatgruppen des oder der Polyisocyanate mit einer mittleren Isocyanatfunktionalität von 2,5 oder mehr im Bereich von 2 zu 1 bis 20 zu 1 liegt.

Durch die Erfindung wird eine verbesserte Tieftemperatur-Schlagzähigkeit bzw. eine verbesserte Tieftemperatur-Crashfestigkeit in strukturellen Epoxidharzklebstoffen für PTMEG basierte Polyurethantoughener erreicht. Es wurde eine deutliche Verbesserung der Impact-Peel-Stärken bei -30°C im Vergleich zu analogen Toughenern, die auf die streng difunktionellen Diisocyanaten wie HDI und IPDI basieren, beobachtet.

Die Erfindung betrifft auch ein Verfahren zur Herstellung dieser Schlagzähigkeitsmodifikatoren, deren Verwendung und diese Schlagzähigkeitsmodifikatoren enthaltende Epoxidharzformulierungen. Bevorzugte Ausführungsformen sind in den abhängigen Ansprüchen wiedergegeben.

### Weg zur Ausführung der Erfindung

Die Vorsilbe Poly in Ausdrücken wie Polyol oder Polyisocyanat bedeutet, dass die Verbindung zwei oder mehr der genannten Gruppen aufweist. Ein Polyol ist somit eine Verbindung mit zwei oder mehr Hydroxygruppen. Ein Polyisocyanat ist eine Verbindung mit zwei oder mehr Isocyanatgruppen. Dementsprechend ist ein Diol bzw. ein Diisocyanat eine Verbindung mit zwei Hydroxygruppen bzw. zwei Isocyanatgruppen.

Ein Isocyanat-terminiertes Polymer ist ein Polymer, das als Endgruppen Isocyanatgruppen aufweist. Bei dem erfindungsgemäßen Polymer sind diese Isocyanatgruppen teilweise oder vollständig blockiert.

Das Isocyanat-terminierte Polymer ist ein Reaktionsprodukt von a) einem oder mehreren Polyolen umfassend Polytetramethylenetherglycol in einem Anteil von mindestens 95 Gew.-%, bezogen auf das Gesamtgewicht der Polyole, und b) zwei oder mehr Polyisocyanaten, die mindestens ein Diisocyanat und mindestens ein Polyisocyanat mit einer mittleren Isocyanatfunktionalität von 2,5 oder mehr umfassen. Die Umsetzung von Polyolen und Polyisocyanaten im allgemeinen ist eine übliche Reaktion zur Bildung von Polyurethanen. Das gebildete Isocyanat-terminierte Polymer ist somit insbesondere ein Isocyanat-terminiertes Polyurethan-Polymer.

Das oder die Polyole zur Herstellung des Isocyanat-terminierten Polymers umfassen Polytetramethylenetherglycol. Es können ein oder mehrere Polytetramethylenetherglycole eingesetzt werden. Polytetramethylenetherglycol wird auch als PTMEG bezeichnet. PTMEG kann z.B. durch Polymerisation von Tetrahydrofuran, z.B. über saure Katalyse, hergestellt werden. Die Polytetramethylenetherglycole sind Diole.

Polytetramethylenetherglycole sind im Handel erhältlich, z. B. die PolyTHF®-Produkte von BASF wie PolyTHF®2000, PolyTHF®2500 CO oder PolyTHF®3000 CO oder die Terathane®-Produkte von Invista B.V.

Die OH-Funktionalität des eingesetzten Polytetramethylenetherglycols liegt bevorzugt im Bereich von etwa 2, z.B. im Bereich von 1,9 bis 2,1. Dies ist durch die kationische Polymerisation des Ausgangsmonomeren Tetrahydrofuran gegeben.

Vorteilhaft sind Polytetramethylenetherglycole mit OH-Zahlen zwischen 170 mg/KOH g bis 35 mg KOH/g, bevorzugt im Bereich von 100 mg KOH/g bis 40 mg KOH/g, und ganz besonders bevorzugt 70 bis 50 mg KOH/g. Sofern nicht anders angegeben, wird in der vorliegenden Anmeldung die OH-Zahl titrimetrisch gemäss DIN 53240 bestimmt. Hierbei wird die Hydroxylzahl durch Acetylierung mit Essigsäureanhydrid und nachfolgender Titration des überschüssigen Essigsäureanhydrids mit alkoholischer Kalilauge bestimmt.

Mit Kenntnis der Difunktionalität können aus den titrimetrisch ermittelten Hydroxylzahlen die OH-Äquivalentgewichte beziehungsweise das mittlere Molekulargewicht des eingesetzten Polytetramethylenetherglycols bestimmt werden.

Vorteilhaft in der vorliegenden Erfindung eingesetzte Polytetramethylenetherglycole weisen bevorzugt ein mittleres Molekulargewicht im Bereich von 500 bis 5000 g/mol, bevorzugter 1000 bis 3000 g/mol und besonders bevorzugt im Bereich von 1.500 bis 2.500 g/mol, insbesondere etwa 2000 g/mol, auf. Die Angaben beziehen sich auf die Berechnung des Molekulargewichts aus den titrimetrisch bestimmten Hydroxylzahlen wie vorstehend angegeben, wobei eine Funktionalität von 2 für PTMEG angenommen wird. Diese Bestimmungsmethode wird auch üblicherweise von den Produzenten dieser Polymere verwendet.

Bezogen auf das Gesamtgewicht der zur Herstellung des Isocyanat-terminierten Polymers eingesetzten Polyole beträgt der Anteil an Polytetramethylenetherglycol mindestens 95 Gew.-% und bevorzugt mindestens 98 Gew.-%. In einer bevorzugten Ausführungsform sind das oder die Polyole Polytetramethylenetherglycol, d.h. es werden nur Polytetramethylenetherglycole als Polyole eingesetzt. Alle in dieser Anmeldung angeführten Merkmale bezüglich des Schlagzähigkeitsmodifikators gelten explizit entsprechend für Reaktionsprodukte, bei denen als Polyole nur Polytetramethylenetherglycol eingesetzt wird.

Zur Herstellung des Isocyanat-terminierten Polymers werden als Polyol primär nur Polytetramethylenetherglycole eingesetzt. Es handelt sich daher um ein Homo-PTMEG basiertes Polymer. Allerdings kann gegebenenfalls mindestens ein weiteres Polyol, insbesondere Kettenverlängerer wie bevorzugt Tetramethylenglycol (TMP) oder DOW VORAPEL T5001 (einem trifunktionellen Polyetherpolyol auf Polybutylenoxidbasis), in geringen Mengen von weniger als 5 Gew.-%, bevorzugt weniger als 2 Gew.-%, bezogen auf das Gesamtgewicht der eingesetzten Polyole, hinzugegeben werden. Der Kettenverlängerer ist vorzugsweise ein Polyol mit einem Molekulargewicht von nicht mehr als 1500 g/mol, bevorzugter nicht mehr als 1000 g/mol. Hierdurch kann die isocyanatseitige Kettenverlängerung mit einer polyolseitigen Kettenverlängerung kombiniert werden.

Das Isocyanat-terminierte Polymer ist aus der Umsetzung von einem oder mehreren Polyolen umfassend Polytetramethylenetherglycol in einem Anteil von mindestens 95 Gew.-%, bezogen auf das Gesamtgewicht der eingesetzten Polyole, mit mindestens zwei Polyisocyanaten erhältlich, die mindestens ein Diisocyanat und mindestens ein Polyisocyanat mit einer mittleren Isocyanatfunktionalität von 2,5 oder mehr umfassen.

Es können ein oder mehrere Diisocyanate eingesetzt werden. Es handelt sich vorzugsweise um monomere Diisocyanate oder Dimere davon. Geeignete Diisocyanate sind z.B. aliphatische, cycloaliphatische, aromatische oder araliphatische Diisocyanate. Diese stellen handelsübliche Produkte dar. Beispiele für geeignete Diisocyanate sind Methylendiphenyldiisocyanat (MDI), Hexamethylendiisocyanat (HDI), Toluoldiisocyanat (TDI), Tolidindisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylendiisocyanat (TMXDI) usw. sowie deren Dimere.

Bevorzugte Diisocyanate sind aliphatische oder cycloaliphatische Diisocyanate, wobei es sich bevorzugt um monomere Diisocyanate oder Dimere davon handelt. Beispiele sind 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (mund p-XDI), m- und p-Tetramethyl-1,3- und -1,4-xylylendiisocyanat (m- und p-TMXDI), Bis-(1-Isocyanato-1-methylethyl)-naphthalin, Dimer- und Trimerfettsäureisocyanate wie 3,6-Bis-(9-isocyanatononyl)-4,5-di-(1-heptenyl)-cyclohexen (Dimeryldiisocyanat) oder Dimere davon, sowie beliebige Mischungen der vorgenannten Isocyanate. Besonders bevorzugt sind HDI und IPDI und deren Dimere.

Ferner werden ein oder mehrere Polyisocyanate mit einer mittleren Isocyanatfunktionalität von 2,5 oder mehr eingesetzt. Das oder die Polyisocyanate mit einer mittleren Isocyanatfunktionalität von 2,5 oder mehr können z.B. eine mittlere Isocyanatfunktionalität von 2,5 bis 5, bevorzugt 2,5 bis 4 aufweisen. Das oder die Polyisocyanate mit einer mittleren Isocyanatfunktionalität von 2,5 oder mehr weisen bevorzugt eine mittlere Isocyanatfunktionalität von 3 oder mehr auf.

Es versteht sich, dass die Isocyanatfunktionalität sich auf die mittlere Isocyanatfunktionalität bezieht, da solche Polyisocyanate häufig Mischungen verschiedener Spezies enthalten. Die mittlere Isocyanatfunktionalität kann z.B. bestimmt werden durch eine titrimetrische Isocyanatbestimmung nach EN ISO 11909 kombiniert mit einer Molmassenbestimmung mittels hochauflösender Massenspektroskopie wie z.B. auf einem LTX Orbitrap XL des Herstellers Thermo Scientific.

Ein Beispiel für ein Triisocyanat ist α,α,α',α',α",α"-Hexamethyl-1,3,5-mesitylentriisocyanat. Bevorzugte Beispiele für Polyisocyanate mit einer mittleren Isocyanatfunktionalität von 2,5 oder mehr sind Oligomere, z.B. Trimere oder höhere Oligomere, von Diisocyanaten. Bevorzugt sind Isocyanurate, Biurete, Iminooxadiazine und Allophanate von Diisocyanaten, insbesondere aliphatischen, cycloaliphatischen, aromatischen oder araliphatischen Diisocyanaten, insbesondere der vorher beschriebenen Diisocyanate, wobei Isocyanurate und Biurete besonders bevorzugt sind. Bei dem Diisocyanat für das Oligomer handelt es sich dabei jeweils bevorzugt um HDI, IPDI und/oder TDI, insbesondere HDI oder IPDI.

Die Oligomere von den Diisocyanaten schließen auch modifizierte ein, bei denen die Oligomere mit anderen Verbindungen, z.B. mit einem Polyether mit einer Hydroxyendgruppe, wie z.B. monoveretherte Ethylenglycol-Oligomere, z.B. O-Methylheptaethylenglycol-Oligomere, modifiziert worden sind. Auf diese Weise können z.B. modifizierte Oligomere der Diisocyanate erhalten werden. Auch solche modifizierten Oligomere sind im Handel erhältlich wie z.B. das in dem Beispiel verwendete Bayhydur®3100.

Oligomere von Diisocyanaten, die gegebenenfalls modifiziert sein können, stellen in der Praxis häufig komplexe Gemische von Substanzen mit unterschiedlichen Oligomerisationsgraden und/oder chemischen Strukturen dar. Sie können auch einen geringen Anteil an monomeren Isocyanaten enthalten. Das Oligomer kann z.B. aus mindestens 2, insbesondere mindestens 3 Diisocyanat-Monomeren, aufgebaut sein, wobei das Oligomer gegebenenfalls modifiziert sein kann. In der Regel ist das Oligomer z.B. aus nicht mehr als 6, insbesondere nicht mehr als 4 Diisocyanat-Monomeren aufgebaut. Die Hauptkomponente ist häufig das Trimer, es können aber auch höheroligomere Produkte enthalten sein.

Besonders bevorzugt sind Biurete von HDI oder IPDI, Isocyanurate von HDI oder IPDI, Allophanate von HDI oder IPDI, TDI-Oligomere sowie gemischte Isocyanurate von TDI und HDI. Besonders bevorzugt sind Isocyanurate von HDI oder IPDI. Das trimere Isocyanurat von HDI oder IPDI weist die folgende allgemeine Formel auf 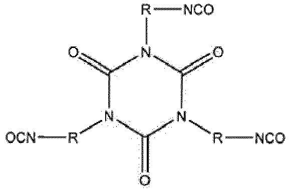 wobei R (CH₂)₆ bzw. der Rest von IPDI nach Entfernung der beiden Isocyanatgruppen ist. Beim IPDI-Isocyanurat sind mehrere Isomere möglich, die als Gemisch vorliegen können. Weiterhin bevorzugt sind die vorstehend genannten Oligomere, die weiter modifiziert sein können, z.B. mit einer oder mehreren Polyetherurethan- oder Polyetherallophanat Gruppen.

Solche Polyisocyanate mit einer mittleren Isocyanatfunktionalität von 2,5 oder mehr bzw. Oligomere sind im Handel erhältlich. Beispiele für kommerziell erhältliche Typen sind HDI-Biurete, beispielsweise Desmodur® N 100 und Desmodur® N 3200 (von Bayer), Tolonate® HDB und Tolonate® HDB-LV (von Rhodia) sowie Duranate® 24A-100 (von Asahi Kasei); HDI-Isocyanurate, beispielsweise Desmodur® N 3300, Desmodur® N 3600 und Desmodur® N 3790 BA (von Bayer), Tolonate® HDT, Tolonate® HDT-LV und Tolonate® HDT-LV2 (von Rhodia), Duranate® TPA-100 und Duranate® THA-100 (von Asahi Kasei) sowie Coronate® HX (von Nippon Polyurethane); HDI-Allophanate, beispielsweise Desmodur® VP LS 2102 (von Bayer); IPDI-Isocyanurate, beispielsweise Desmodur® Z 4470 (von Bayer) und Vestanat® T1890/100 (von Evonik); TDI-Oligomere, beispielsweise Desmodur® IL (von Bayer); gemischte Isocyanurate auf Basis TDI / HDI, zum Beispiel Desmodur® HL (von Bayer); sowie modifizierte Polymere wie Bayhydur 3100 (von Bayer), ein HDI-Isocyanurat, welches mit einem Polyether über eine Urethanverknüpfung modifiziert ist, Bayhydur 304 (von Bayer), ein HDI-Isocyanurat, welches mit einem Polyether über eine Allophanatver-knüpfung modifiziert ist.

Das molare Verhältnis von Isocyanatgruppen des oder der Diisocyanate zu Isocyanatgruppen des oder der Polyisocyanate mit einer mittleren Isocyanatfunktionalität von 2,5 oder mehr, die zur Herstellung des Isocyanat-terminierten Polymers eingesetzt werden, liegt im Bereich von 2 zu 1 bis 20 zu 1, bevorzugt von 2 zu 1 bis 10 zu 1 oder 2,5 zu 1 bis 10 zu 1 und besonders bevorzugt von 3 zu 1 bis 8 zu 1. Durch das molare Verhältnis der Isocyanatgruppen des oder der Diisocyanate zu Isocyanatgruppen des oder der Polyisocyanate mit einer mittleren Isocyanatfunktionalität von 2,5 oder mehr, wird überraschenderweise eine verbesserte Tieftemperatur-Zähigkeit bei Einsatz in Epoxidharzformulierungen erreicht. Überdies wird eine Gelbildung vermieden.

Durch Variation der Stöchiometrie der Reaktionspartner und/oder einer abgestuften Umsetzung der Edukte kann die Struktur oder Kettenlänge der Isocyanat-terminierten Polymere variiert werden.

Einerseits können z.B. in einer ersten Stufe, in der nur ein Teil der Polyisocyanate eingesetzt wird, durch einen Überschuss der OH-Gruppen bezogen auf die NCO-Gruppen OH-funktionelle Polymere mit unterschiedlich langen Ketten erhalten werden. Solche kettenverlängerte Polyole enthalten Urethan-Gruppen in der Kette und können in einer zweiten Stufe mit restlichen Polyisocyanaten weiter umgesetzt werden, so dass Isocyanat-terminierte Polymere entstehen. Anderseits können durch einen Unterschuss der OH-Gruppen bezogen auf die NCO-Gruppen NCOfunktionelle Polymere mit unterschiedlich langen Ketten erhalten werden.

Die Kettenlänge der isocyanat-terminierten Polymere ist stark abhängig vom molaren Verhältnis [OH]/[NCO] der eingesetzten Polyole und Polyisocyanate. Die Ketten sind umso länger je näher dieses Verhältnis bei 1 ist. Es ist dem Fachmann klar, dass zu lange Ketten zu nicht mehr verwendbaren Polymeren führen würden.

Zur Herstellung des Isocyanat-terminierten Polymers sind die Anteile an Polyol und Polyisocyanate bevorzugt so, dass die Isocyanatgruppen im stöchiometrischen Überschuss gegenüber den Hydroxygruppen vorliegen, wobei das molare Verhältnis von Isocyanatgruppen zu Hydroxygruppen z.B. größer 1,3, vorzugsweise größer 3 zu 2 ist, z.B. im Bereich von 3 zu 1 bis 3 zu 2, bevorzugt nahe im Bereich von 2 zu 1 liegt.

Bei dem erfindungsgemäßen Schlagzähigkeitsmodifikator sind die Isocyanatgruppen des Isocyanatgruppen-terminierten Polymers durch Umsetzung mit einem Blockierungsmittel teilweise oder vollständig blockiert, wobei bevorzugt mindestens 80%, besonders bevorzugt mindestens 96%, der Isocyanatgruppen des Isocyanat-terminierten Polymers blockiert sind. In einer bevorzugten Ausführungsform sind die Isocyanatgruppen im wesentlichen vollständig blockiert, d.h. zu mindestens 99%. Bei dem einen Blockierungsmittel kann es sich um ein oder mehrere Blockierungsmittel handeln.

Die Blockierung von Isocyanatgruppen durch entsprechende Blockierungsmittel, die thermoreversibel mit Isocyanatgruppen reagieren können, ist auf dem Gebiet eine gängige Maßnahme und der Fachmann kann sie ohne weiteres durchführen. Der Fachmann kennt eine breite Anzahl geeigneter Blockierungsmittel bzw. Blockierungsgruppen, z.B. aus den Übersichtsartikeln von Douglas A. Wick in Progress in Organic Coatings 36 (1999), 148-172 und in Progress in Organic Coatings 41 (2001), 1-83, worauf hiermit verwiesen wird.

Bei dem Blockierungsmittel handelt es sich insbesondere um eine protonenaktive Verbindung, die auch als H-acide Verbindung bezeichnet wird. Der Wasserstoff des Blockierungsmittels, der mit einer Isocyanatgruppe reagieren kann (acider Wasserstoff), ist dabei üblicherweise an einem Sauerstoffatom, einem Stickstoffatom, gewöhnlich von einem sekundären Amin, oder einem Kohlenstoffatom einer CHaciden Verbindung gebunden. Das Blockierungsmittel ist daher bevorzugt ein Alkohol, eine Verbindung mit mindestens einer aromatischen Hydroxylgruppe wie Phenole und Bisphenole, ein sekundäres Amin, ein Oxim oder eine CH-acide Verbindung. Acider Wasserstoff wird auch als aktiver Wasserstoff bezeichnet.

Hierbei kann das Blockierungsmittel über den aciden Wasserstoff nach dem nachstehend gezeigten Schema in einer nucleophilen Additionsreaktion mit freien Isocyanatfunktionalitäten reagieren. B ist dabei der organische Rest des Blockierungsmittels nach Entfernung des aciden Wasserstoffs.

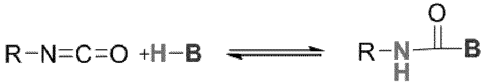

Das Blockierungsmittel ist vorzugsweise ausgewählt aus einer Verbindung, die mindestens eine aliphatische oder aromatische Hydroxylgruppe aufweist, einer Verbindung, die mindestens eine sekundäre Aminogruppe aufweist, einer Verbindung, die mindestens eine Oximgruppe aufweist, oder einer Verbindung, die mindestens eine CH-acide Gruppe aufweist, wobei eine Verbindung mit mindestens einer aliphatischen oder aromatischen Hydroxylgruppe bevorzugt ist. Das Blockierungsmittel kann eine oder mehrere, vorzugsweise ein oder zwei, der genannten Gruppen aufweisen. Eine aliphatische Hydroxylgruppe ist an einem aliphatischen C-Atom gebunden. Eine aromatische Hydroxylgruppe ist an einem aromatischen C-Atom gebunden, wobei es sich bevorzugt um eine phenolische Hydroxylgruppe handelt.

Beispiele für geeignete Blockierungsmittel sind nachstehend genannt:

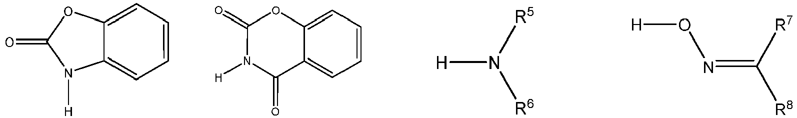

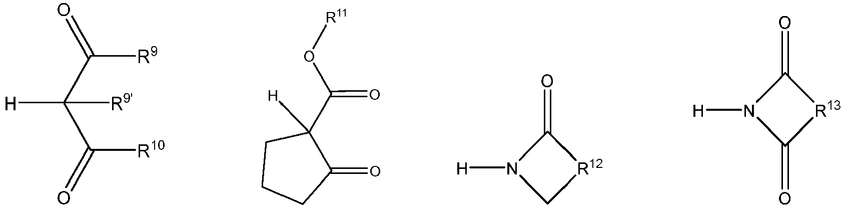

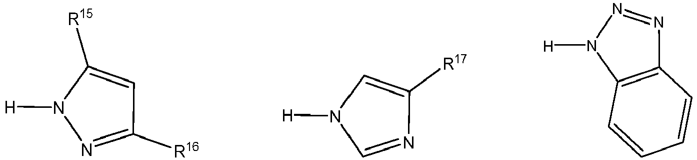

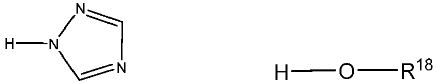

Hierbei stehen R⁵, R⁶, R⁷ und R⁸ jeweils unabhängig voneinander für eine Alkyl- oder Cycloalkyl- oder Aryl- oder Aralkyl- oder Arylalkyl-Gruppe oder R⁵ zusammen mit R⁶ oder R⁷ zusammen mit R⁸ bilden einen Teil eines 4- bis 7- gliedrigen Rings, welcher gegebenenfalls substituiert ist.

Weiterhin stehen R⁹, R^{9'} und R¹⁰ jeweils unabhängig voneinander für eine Alkyl- oder Aralkyl- oder Aryl- oder Arylalkyl-Gruppe oder für eine Alkyloxy- oder Aryloxy- oder Aralkyloxy-Gruppe. R¹¹ steht für eine Alkylgruppe.

Des Weiteren stehen R¹² und R¹³ jeweils unabhängig voneinander für eine Alkylengruppe mit 2 bis 5 C-Atomen, welche gegebenenfalls Doppelbindungen aufweist und/oder substituiert ist, oder für eine Phenylengruppe oder für eine hydrierte Phenylengruppe.

R¹⁵, R¹⁶ und R¹⁷ stehen jeweils unabhängig voneinander für H oder für eine Alkylgruppe oder für eine Arylgruppe oder eine Aralkylgruppe. R¹⁸ steht für eine substituierte oder unsubstituierte Aralkylgruppe oder bevorzugt für eine ein- oder mehrkernige substituierte oder unsubstituierte Aromatengruppe, insbesondere substituierte oder unsubstituierte Phenylgruppe, welche gegebenenfalls eine oder mehrere aromatische Hydroxylgruppen aufweist.

Das Blockierungsmittel ist bevorzugt ein Alkohol, insbesondere ein Aralkylalkohol wie z.B. Benzylalkohol, und insbesondere ein Phenol oder ein Bisphenol. Die Phenole und Bisphenole können ein oder mehrere Substituenten aufweisen. Geeignete Substituenten sind z.B. Alkyl, z.B. C₁₋₂₀-Alkyl, Alkenyl, z.B. C₂₋₂₀-Alkenyl, Alkoxy, z.B. C₁₋₂₀-Alkoxy, bevorzugt C₁₋₄-Alkoxy, oder Aryl, z.B. Phenyl.

Beispiele für Phenole und Bisphenole, die als Blockierungsmittel geignet sind, sind insbesondere Phenol, Cardanol (3-Pentadecenylphenol (aus Cashewnuss-Schalen-Öl)), Nonylphenol, *m*/*p*-Methoxyphenole, mit Styrol oder Dicyclopentadien umgesetzte Phenole, Bisphenol-A und Bisphenol-F.

Die Erfindung betrifft auch ein Verfahren zur Herstellung eines Schlagzähigkeitsmodifikators gemäß der Erfindung, umfassend
A) die Umsetzung von
   a) einem oder mehreren Polyolen umfassend Polytetramethylenetherglycol in einem Anteil von mindestens 95 Gew.-%, bezogen auf das Gesamtgewicht der Polyole, und
   b) zwei oder mehr Polyisocyanaten, die mindestens ein Diisocyanat und mindestens ein Polyisocyanat mit einer mittleren Isocyanatfunktionalität von 2,5 oder mehr umfassen,
   gegebenenfalls in Anwesenheit eines Katalysators, wobei das molare Verhältnis von Isocyanatgruppen des oder der Diisocyanate zu Isocyanatgruppen des oder der Polyisocyanate mit einer mittleren Isocyanatfunktionalität von 2,5 oder mehr im Bereich von 2 zu 1 bis 20 zu 1, bevorzugt 2,5 zu 1 bis 10 zu 1, liegt, unter Bildung eines Isocyanat-terminierten Polymers, und
B) Umsetzen des Isocyanat-terminierten Polymers mit einem Blockierungsmittel, gegebenenfalls in Anwesenheit eines Katalysators, um die Isocyanatgruppen des Isocyanat-terminierten Polymers teilweise oder vollständig zu blockieren.

Alle vorstehenden Angaben zum erfindungsgemäßen Schlagzähigkeitsmodifikator gelten entsprechend für das erfindungsgemäße Verfahren.

Die Umsetzung von Polyolen, hier PTMEG und gegebenenfalls weiteren Polyolen in geringen Mengen, und Polyisocyanaten und die dafür geeigneten Bedingungen sind dem Fachmann vertraut. Für die Herstellung des Isocyanat-terminierten Polymers wird eine Mischung von PTMEG und optional weiteren Polyolen in einem Anteil von weniger als 5 Gew.-%, bezogen auf das Gesamtgewicht der Polyole, und den Polyisocyanaten umgesetzt. Gegebenenfalls kann auch eine stufenweise Zugabe der Ausgangskomponenten erfolgen, z.B. kann wie bereits vorstehend erläutert das oder die Polyole mit einem Teil an Polyisocyanat umgesetzt werden, um zunächst ein Hydroxyl-terminiertes Polymer zu erhalten, und anschließend restliches Polyisocyanat zugesetzt werden, um das Isocyanat-terminierte Polymer zu erhalten.

Für die Umsetzung in Schritt A) kann gegebenenfalls ein Katalysator zugesetzt werden. Beispiele für geeignete Katalysatoren sind z.B. organische Zinnverbindungen, wie Dibutylzinndilaurat (DBTL), oder auch organische Bismuthverbindungen wie Bi(III)-neodecanoat. Gegebenenfalls können auch Stabilisatoren, z.B. für PTMEG, zugegeben werden, z.B. Butylhydroxytoluol (BHT).

Die Umsetzung in Schritt A) wird zweckmäßigerweise bei erhöhter Temperatur durchgeführt, z.B. bei einer Temperatur von mindestens 60°C, bevorzugt mindestens 80°C, insbesondere bei einer Temperatur im Bereich von 80°C bis 100 °C, bevorzugt um ca. 90°C. Die Dauer hängt naturgemäß stark von den gewählten Reaktionsbedingungen ab und kann z.B. im Bereich von 15 min bis 6h liegen. Der Fortgang bzw. die Beendigung der Reaktion kann ohne weiteres anhand der Analyse des Isocyanatgehalts in der Reaktionsmischung kontrolliert werden.

Die Blockierung der Isocyanatgruppen mit dem Blockierungsmittel und die dafür geeigneten Bedingungen sind dem Fachmann ebenfalls vertraut.

Für die Umsetzung in Schritt B) kann gegebenenfalls ebenfalls ein Katalysator zugesetzt werden. Beispiele für geeignete Katalysatoren sind z.B. organische Zinnverbindungen, wie Dibutylzinndilaurat (DBTL), oder auch organische Bismuthverbindungen wie Bi(III)-neodecanoat. Die Umsetzung in Schritt B) wird zweckmäßigerweise bei erhöhter Temperatur durchgeführt, z.B. bei einer Temperatur von mindestens 90°C, bevorzugt mindestens 100°C, insbesondere bei einer Temperatur im Bereich von 100 bis 135°C, bevorzugt um ca. 110°C. Die Dauer hängt naturgemäß stark von den gewählten Reaktionsbedingungen ab und kann z.B. im Bereich von 15 min bis 24 h liegen. Der Fortgang bzw. die Beendigung der Reaktion kann ohne weiteres anhand der Analyse des Isocyanatgehalts in der Reaktionsmischung kontrolliert werden.

Das molare Verhältnis von Isocyanatgruppen des Isocyanat-terminierten Polymers zu den H-aciden Gruppen, insbesondere Hydroxylgruppen, des Blockierungsmittels kann nach Bedarf gewählt werden, liegt aber z.B. im Bereich von 1 zu 1 bis 2 zu 3, bevorzugt von 1 zu 1,15 bis 1 zu 1,25. Auf diese Weise kann eine im Wesentlichen vollständige Blockierung erreicht werden.

Die in Schritt A) und Schritt B) erhaltenen Produkte können wie sie sind verwendet bzw. weiterverwendet werden, d.h eine Aufarbeitung ist im allgemeinen nicht erforderlich. Die Bildung des Isocyanat-terminierten Polymers und die Blockierung der Isocyanatgruppen können z.B. vorteilhaft als Eintopfreaktion durchgeführt werden.

Der erfindungsgemäße Schlagzähigkeitsmodifikator ist insbesondere für den Einsatz in einer einkomponentigen (1K) oder zweikomponentigen (2K) Epoxidharzzusammensetzung, bevorzugt einer 1 K Epoxidharzzusammensetzung, zur Erhöhung der Schlagzähigkeit der gehärteten Epoxidharzmatrix geeignet. Die 2K oder 1K Epoxidharzzusammensetzung kann flüssig, pastös oder fest und/oder kalt- oder hitzehärtend sein.

Die Epoxidharzzusammensetzung ist bevorzugt ein 1K oder 2K Epoxidharzklebstoff, insbesondere ein struktureller bzw. crashfester Klebstoff, z.B. für OEM-Produkte, EP/PU-Hybride, Strukturschäume aus Epoxidharzsystemen (wie Sika Reinforcer®) oder Reparaturanwendungen, wobei ein 1K Epoxidharzklebstoff besonders bevorzugt ist.

Die erfindungsgemäße einkomponentige oder zweikomponentige Epoxidharz-Zusammensetzung umfasst mindestens ein Epoxidharz, mindestens einen Härter für Epoxidharze, und den Schlagzähigkeitsmodifikator gemäß der Erfindung. Der erfindungsgemäße Schlagzähigkeitsmodifikator wurde bereits vorstehend beschrieben. Der Anteil des erfindungsgemäßen Schlagzähigkeitsmodifikators in der 1 Epoxidharzzusammensetzung kann in breiten Bereichen variieren, liegt aber z.B. in einem Bereich von 5 bis 60 Gew.-%, bevorzugt von 10 bis 25 Gew.-%, bezogen auf das Gesamtgewicht der Epoxidharzzusammensetzung.

Bei dem in der Epoxidharzzusammensetzung enthaltenen Epoxidharz kann es sich um jedes übliche auf diesem Gebiet eingesetzte Epoxidharz handeln. Epoxidharze werden z.B. aus der Umsetzung einer Epoxidverbindung wie z.B. Epichlorhydrin mit einem mehrfunktionellen aliphatischen oder aromatischen Alkohol, d.h. einem Diol, Triol oder Polyol, erhalten. Es können ein oder mehrere Epoxidharze eingesetzt werden. Das Epoxidharz ist bevorzugt ein Epoxid-Flüssigharz und/oder ein Epoxid-Festharz.

Als Epoxid-Flüssigharz oder Epoxid-Festharz gelten vorzugsweise Diglycidylether, wie z.B. der Formel (I) 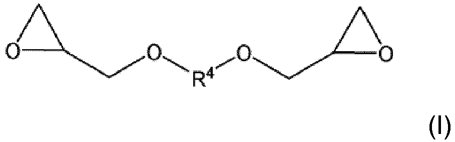 worin R⁴ für einen zweiwertigen aliphatischen oder einkernigen aromatischen oder einen zweikernigen aromatischen Rest steht.

Beispiele für Diglycidylether sind insbesondere
- Diglycidylether von difunktionellen gesättigten oder ungesättigten, verzweigten oder unverzweigten, zyklischen oder offenkettigen C₂-C₃₀-Alkoholen, wie beispielsweise Ethylenglykol-, Butandiol-, Hexandiol-, Oktandiolgylcidylether, Cyclohexandimethanoldigylcidylether, Neopentylglycoldiglycidylether;
- Diglycidylether von difunktionellen, nieder- bis hochmolekularen Polyetherpolyolen wie beispielsweise Polyethylenglycol-diglycidylether, Polypropyleneglycol-diglycidylether;
- Diglycidylether von difunktionellen Diphenolen und gegebenenfalls Triphenolen, wobei hierunter nicht nur reine Phenole, sondern gegebenenfalls auch substituierte Phenole verstanden werden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen. Als Bisphenole und gegebenenfalls Triphenolen sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoat, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-Bis-(p-hydroxyphenyl)phthalid, 5,5-Bis(4-hydroxyphenyl)hexahydro-4,7-methanoindan, Phenolpthalein, Fluorescein, 4,4'-[Bis-(hydroxyphenyl)-1,3-phenylenbis-(1-methylethyliden)] (=Bisphenol-M), 4,4'-[Bis-(hydroxyphenyl)-1,4-phenylenbis-(1-methylethyliden)] (=Bisphenol-P), 2,2'-Diallyl-bisphenol-A, Diphenole und Dikresole hergestellt durch Umsetzung von Phenolen oder Kresolen mit Diisopropylidenbenzol, Phloroglucin, Gallsäureester, Phenol- oder Kresolnovolake mit -OH-Funktionalität von 2,0 bis 3,5 sowie alle Isomeren der vorgenannten Verbindungen.

Besonders bevorzugte Epoxidharze sind Epoxid-Flüssigharze der Formel (A-I) und Epoxid-Festharze der Formel (A-II).

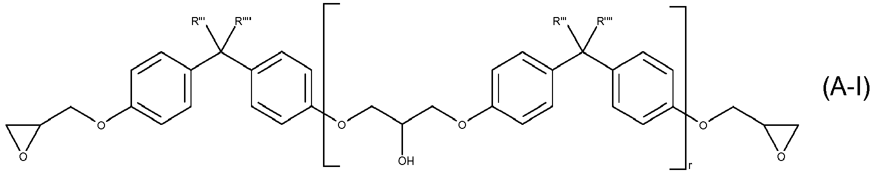

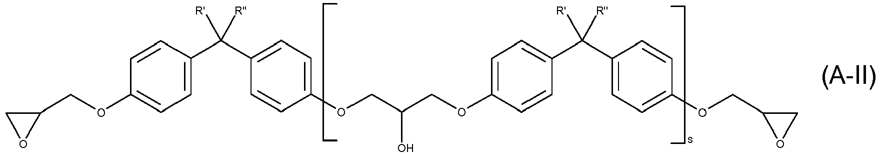

Hierbei stehen die Substituenten R', R", R'" und R"" unabhängig voneinander entweder für H oder CH₃. Weiterhin steht der Index r für einen Wert von 0 bis 1. Bevorzugt steht r für einen Wert von kleiner als 0,2. Weiterhin steht der Index s für einen Wert von >1, insbesondere > 1,5, insbesondere von 2 bis 12. Verbindungen der Formel (A-II) mit einem Index s von größer 1 bis 1,5 werden vom Fachmann als Semisolid-Epoxidharze bezeichnet. Für die hier vorliegende Erfindung werden sie ebenfalls als Festharze betrachtet. Bevorzugt sind jedoch Epoxid-Festharze im engeren Sinn, d.h. wo der Index s einen Wert von > 1,5 aufweist.

Derartige Epoxid-Festharze sind kommerziell erhältlich beispielsweise von Dow oder Huntsman oder Hexion. Handelsübliche Epoxid-Flüssigharze der Formel (A-I) sind z.B. als Araldite® GY 250, Araldite® PY 304, Araldite® GY 282 (Huntsman, bzw. Hexion) oder D.E.R.™ 331 oder D.E.R.™ 330 (Dow) oder D.E.R.™ 332 (Dow) oder Epikote 828 (Hexion) erhältlich.

Bevorzugt handelt es beim Diglycidylether der Formel (I) um ein Epoxid-Flüssigharz, insbesondere um ein Epoxid-Flüssigharz der Formel (A-I), insbesondere ein Diglycidylether von Bisphenol-A (BADGE), von Bisphenol-F sowie von Bisphenol-A/F. Ferner sind auch epoxidierte Novolake bevorzugte Epoxidharze.

Die Epoxidharzzusammensetzung enthält ferner einen Härter für das Epoxidharz. In einer Ausführungsform, insbesondere für die einkomponentige Epoxidharzzusammensetzung, stellt der Härter für Epoxidharze einen dar, welcher durch erhöhte Temperatur aktiviert wird. In dieser Ausführungsform stellt die Zusammensetzung eine hitzehärtende Epoxidharzzusammensetzung dar. Unter "erhöhter Temperatur" wird hier in der Regel z.B. eine Temperatur über 100°C, in der Regel über 110°C oder bevorzugter über 120°C, insbesondere zwischen 110°C und 200°C oder 120°C bis 200°C, verstanden. Bei einem solchen Härter für Epoxidharze handelt es sich vorzugsweise um einen Härter, welcher ausgewählt ist aus der Gruppe bestehend aus Dicyandiamid, Guanamine, Guanidine, Aminoguanidine und deren Derivate. Weiterhin möglich sind beschleunigend wirksame Härter, wie substituierte Harnstoffe, wie beispielsweise 3-Chlor-4-methylphenylharnstoff (Chlortoluron), oder Phenyldimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron) aber auch aliphatisch substituierte Harnstoffe. Weiterhin können Verbindungen der Klasse der Imidazole, wie 2-Isopropylimidazol oder 2-Hydroxy-N-(2-(2-(2-hydroxyphenyl)-4,5-dihydroimidazol-1-yl)ethyl)benzamid und Amin-Komplexe eingesetzt werden.

Bevorzugt handelt es sich beim dem durch Hitze aktivierbaren Härter um einen Härter, welcher ausgewählt ist aus der Gruppe bestehend aus Dicyandiamid, Guanamine, Guanidine, Aminoguanidine und deren Derivate; substituierte Harnstoffe, insbesondere 3-Chlor-4-methylphenylharnstoff (Chlortoluron), oder Phenyldimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff (Diuron) oder auch aliphatisch substituierte Harnstoffe, sowie Imidazole und Amin-Komplexe. Besonders bevorzugt als Härter ist Dicyandiamid.

Vorteilhaft beträgt der Gesamtanteil des Härters für Epoxidharze, welcher durch erhöhte Temperatur aktiviert wird, 0,5 bis 10 Gewichts-%, vorzugsweise 1 bis 8 Gewichts-%, bezogen auf das Gewicht der gesamten Zusammensetzung.

Als Härter für Epoxidharzzusammensetzungen können in einer alternativen Ausführungsform insbesondere z.B. Polyamine, Polymercaptane, Polyamidoamine, aminofunktionelle Polyamin/Polyepoxid-Addukte eingesetzt werden, wie sie dem Fachmann als Härter bestens bekannt sind. Diese Härter sind insbesondere für eine zweikomponentige Epoxidharzzusammensetzung geeignet, welche aus zwei Komponenten, d.h. einer ersten Komponente und einer zweiten Komponente besteht. Die erste Komponente umfasst z.B. zumindest den Schlagzähigkeitsmodifikator gemäß der Erfindung und mindestens ein Epoxidharz, insbesondere ein Epoxid-Flüssigharz und/oder Epoxid-Festharz. Die zweite Komponente umfasst zumindest einen Härter für Epoxidharze. Die erste Komponente und die zweite Komponente werden je in einem individuellen Behälter aufbewahrt. Erst beim Zeitpunkt des Gebrauchs werden die zwei Komponenten miteinander gemischt und die reaktiven Bestandteile reagieren miteinander und führen so zu einer Vernetzung der Zusammensetzung. Derartige zweikomponentige Epoxidharzzusammensetzungen sind bereits bei tiefen Temperaturen, typischerweise zwischen 0 °C bis 100 °C, insbesondere bei Raumtemperatur, aushärtbar. In dieser Ausführungsform erfolgt die Härtung durch eine Additionsreaktion zwischen Härter und der in der Zusammensetzung vorhandenen Epoxidgruppen aufweisenden Verbindungen. Somit ist es in dieser Ausführungsform besonders vorteilhaft, wenn die Menge des Härters in der gesamten Zusammensetzung so bemessen ist, dass die Epoxid-reaktiven Gruppen in einem stöchiometrischen Verhältnis zu den Epoxid-Gruppen stehen.

Die Epoxidharzzusammensetzung kann gegebenenfalls weiterhin mindestens einen zusätzlichen optionalen Schlagzähigkeitsmodifikator umfassen, welcher verschieden von den bereits beschriebenen erfindungsgemäßen Schlagzähigkeitsmodifikatoren ist. Die zusätzlichen Schlagzähigkeitsmodifikatoren können fest oder flüssig sein.

In einer Ausführungsform ist dieser zusätzliche Schlagzähigkeitsmodifikator ein Flüssigkautschuk, welcher ein carboxyl- oder epoxidterminiertes Acrylnitril/ Butadien-Copolymer oder ein Derivat davon ist. Derartige Flüssigkautschuke sind beispielsweise unter dem Namen Hypro® (früher Hycar®) CTBN und CTBNX und ETBN von Emerald Performance Materials LLC kommerziell erhältlich. Als Derivate sind insbesondere Epoxidgruppen aufweisende Elastomer-modifizierte Präpolymere, wie sie unter der Produktlinie Polydis®, vorzugsweise aus der Produktlinie Polydis® 36.., von der Firma Struktol® (Schill + Seilacher Gruppe, Deutschland) oder unter der Produktlinie Albipox® (Evonik Hanse GmbH, Deutschland) kommerziell vertrieben werden, geeignet. In einer weiteren Ausführungsform ist der Schlagzähigkeitsmodifikator ein Polyacrylatflüssigkautschuk, der mit flüssigen Epoxidharzen vollständig mischbar ist und sich erst beim Aushärten der Epoxidharzmatrix zu Mikrotröpfchen entmischt. Derartige Polyacrylatflüssigkautschuke sind z.B. unter der Bezeichnung 20208-XPA von Rohm und Haas erhältlich.

Es ist dem Fachmann klar, dass natürlich auch Mischungen von Flüssigkautschuken verwendet werden können, insbesondere Mischungen von Carboxyl- oder Epoxid-terminierten Acrylnitril/Butadien-Copolymeren oder Derivaten davon mit Epoxid-terminierten Polyurethanpräpolymeren.

In einer weiteren Ausführungsform kann der zusätzliche Schlagzähigkeitsmodifikator ein fester Schlagzähigkeitsmodifikator sein, welcher ein organisches Ionen ausgetauschtes Schichtmineral ist. Das ionengetauschte Schichtmineral kann entweder ein kationengetauschtes oder ein anionengetauschtes Schichtmineral sein. Es ist auch möglich, dass die Zusammensetzung gleichzeitig ein kationengetauschtes Schichtmineral und ein anionengetauschtes Schichtmineral enthält.

Das kationengetauschte Schichtmineral wird hierbei erhalten aus einem Schichtmineral, bei welchem zumindest ein Teil der Kationen durch organische Kationen ausgetauscht worden sind. Beispiele für derartige kationengetauschte Schichtmineralien sind insbesondere diejenigen, welche in US 5707439 oder in US 6197849 erwähnt sind. Dort ist auch das Verfahren zur Herstellung dieser kationengetauschten Schichtminerale beschrieben. Bevorzugt als Schichtmineral ist ein Schichtsilikat. Insbesondere bevorzugt handelt es sich beim Schichtmineral um ein Phyllosilikat, wie sie in US 6197849, Spalte 2, Zeile 38, bis Spalte 3, Zeile 5, beschrieben sind, insbesondere um einen Bentonit. Als besonders geeignet haben sich Schichtmineral wie Kaolinit oder ein Montmorillionit oder ein Hectorit oder ein Illit erwiesen.

Zumindest ein Teil der Kationen des Schichtminerals wird durch organische Kationen ersetzt. Beispiele für derartige Kationen sind n-Octylammonium, Trimethyldodecylammonium, Dimethyldodecylammonium oder Bis(hydroxyethyl)octadecylammonium oder ähnliche Derivate von Aminen, die aus natürlichen Fetten und Ölen gewonnen werden können; oder Guanidiniumkationen oder Amidiniumkationen;oder Kationen der N-substituierten Derivate von Pyrrolidin, Piperidin, Piperazin, Morpholin, Thiomorpholin; oder Kationen von 1,4-Diazabicyclo[2.2.2]octan (DABCO) und 1-Azabicyclo[2.2.2]octan; oder Kationen von N-substituierten Derivaten von Pyridin, Pyrrol, Imidazol, Oxazol, Pyrimidin, Chinolin, Isochinoilin, Pyrazin, Indol, Bezimidazol, Benzoxaziol, Thiazol Phenazin und 2,2'-Bipyridin. Weiterhin sind geeignet cyclische Amidiniumkationen, insbesondere solche, wie sie in US 6197849 in Spalte 3, Zeile 6, bis Spalte 4, Zeile 67, offenbart werden.

Bevorzugte kationengetauschte Schichtminerale sind dem Fachmann unter der Bezeichnung Organoclay oder Nanoclay bekannt und sind kommerziell zum Beispiel unter den Gruppennamen Tixogel® oder Nanofil® (Südchemie), Cloisite® (Southern Clay Products) oder Nanomer® (Nanocor Inc.) oder Garmite® (Rockwood) erhältlich.

Das anionengetauschte Schichtmineral wird erhalten aus einem Schichtmineral, bei welchem zumindest ein Teil der Anionen durch organische Anionen ausgetauscht worden sind. Ein Beispiel für ein anionengetauschtes Schichtmineral ist ein Hydrotalcit, bei dem zumindest ein Teil der Carbonat-Anionen der Zwischenschichten durch organische Anionen ausgetauscht wurden.

In einer weiteren Ausführungsform ist der zusätzliche Schlagzähigkeitsmodifikator ein fester Schlagzähigkeitsmodifikator, welcher ein Blockcopolymer ist. Das Blockcopolymer wird erhalten aus einer anionischen oder kontrollierten radikalischen Polymerisation von Methacrylsäureester mit mindestens einem weiteren eine olefinisch Doppelbindung aufweisenden Monomer. Als eine olefinische Doppelbindung aufweisende Monomere sind insbesondere solche bevorzugt, bei denen die Doppelbindung unmittelbar mit einem Heteroatom oder mit mindestens einer weiteren Doppelbindung konjugiert ist. Insbesondere sind Monomere geeignet, welche ausgewählt sind aus der Gruppe umfassend Styrol, Butadien, Acrylnitril und Vinylacetat. Bevorzugt sind Acrylat-Styrol-Acrylsäure (ASA)-Copolymere, erhältlich z.B. unter dem Namen GELOY® 1020 von GE Plastics. Besonders bevorzugte Blockcopolymere sind Blockcopolymere aus Methacrylsäuremethylester, Styrol und Butadien. Derartige Blockcopolymere sind beispielsweise als Triblockcopolymere unter der Gruppenbezeichnung SBM von Arkema erhältlich.

In einer weiteren Ausführungsform ist der zusätzliche Schlagzähigkeitsmodifikator ein Core-Shell-Polymer. Core-Shell-Polymere bestehen aus einem elastischen Kernpolymer und einem starren Schalen-Polymer. Insbesondere geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell-Struktur bildet sich entweder spontan durch Entmischen eines Blockcopolymers oder ist durch die Polymerisationsführung als Latex oder Suspensions-polymerisation mit nachfolgender Pfropfung vorgegeben. Bevorzugte Core-Shell-Polymere sind sogenannte MBS-Polymere, welche kommerziell unter dem Handelsnamen Clearstrength® von Arkema, Paraloid® von Dow (früher Rohm und Haas) oder F-351® von Zeon erhältlich sind.

Besonders bevorzugt sind Core-Shell Polymerpartikel, die bereits als getrockneter Polymerlatex vorliegen. Beispiele hierfür sind GENIOPERL® M23A von Wacker mit Polysiloxankern und Acrylatschale, strahlungsvernetzte Kautschukpartikel der NEP Reihe, hergestellt von Eliokem, oder Nanoprene® von Lanxess oder Paraloid® EXL von Dow. Weitere vergleichbare Beispiele für Core-Shell-Polymere werden unter dem Namen Albidur® von Evonik Hanse GmbH, Deutschland, angeboten. Ebenso geeignet sind nanoskalige Silikate in Epoxid-Matrix, wie sie unter dem Handelnamen Nanopox von Evonik Hanse GmbH, Deutschland, angeboten werden.

In einer weiteren Ausführungsform ist der zusätzliche Schlagzähigkeitsmodifikator ein Umsetzungsprodukt eines carboxylierten festen Nitrilkautschuks mit überschüssigem Epoxidharz.

Es hat sich gezeigt, dass in der Zusammensetzung vorteilhaft ein oder mehrere zusätzliche Schlagzähigkeitsmodifikatoren vorhanden sind. Als besonders vorteilhaft hat sich gezeigt, dass ein derartiger weiterer Schlagzähigkeitsmodifikator ein Epoxidgruppenden aufweisender Schlagzähigkeitsmodifikator der Formel (II) ist.

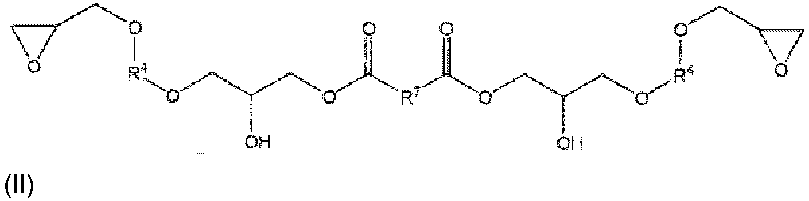

Hierin ist R⁷ ein zweiwertiger Rest eines Carboxylgruppen-terminierten Butadien/ Acrylnitril-Copolymers (CTBN) nach Entfernung der terminalen Carboxylgruppen. Der Rest R⁴ ist wie vorstehend für Formel (I) definiert und beschrieben. Insbesondere steht R⁷ für einen Rest, der durch formelle Entfernung der Carboxyl-Gruppen eines unter dem Namen Hypro® CTBN von Noveon kommerziell vertriebenen Carboxylgruppen-terminierten Butadien/Acrylonitril-Copolymers CTBN, erhalten wird. R⁷ ist bevorzugt ein zweiwertiger Rest der Formel (II').

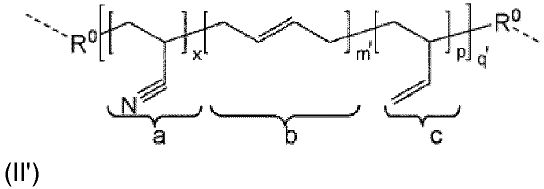

R⁰ steht hierbei für einen linearen oder verzweigten Alkylenrest mit 1 bis 6 C-Atomen, insbesondere mit 5 C-Atomen, welcher gegebenenfalls mit ungesättigten Gruppen substituiert ist. In einer besonders zu erwähnenden Ausführungsform stellt der Substituent R⁰ einen Rest der Formel (II-a) dar. 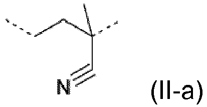 Weiterhin steht der Index q' für einen Wert zwischen 40 und 100, insbesondere zwischen 50 und 90. Die Bezeichnungen b und c stehen für die Strukturelemente, welche von Butadien stammen und a für das Strukturelement, welches von Acrylnitril stammt. Die Indices x, m', und p stellen ihrerseits Werte dar, die das Verhältnis der Strukturelement a, b und c zueinander beschreiben. Der Index x steht für Werte von 0,05 bis 0,3, der Index m' für Werte von 0,5 - 0,8, der Index p für Werte von 0,1 - 0,2 mit der Maßgabe, dass die Summe von x, m' und p gleich 1 ist.

Dem Fachmann ist verständlich, dass die in Formel (II') gezeigte Struktur als vereinfachte Darstellung zu verstehen sind. Somit können die Bausteine a, b und c jeweils zufällig, abwechselnd oder blockweise zueinander angeordnet sein. Insbesondere stellt somit Formel (II') nicht zwangsläufig ein Triblock-Copolymer dar. Die Herstellung des Schlagzähigkeitsmodifikator der Formel (II) erfolgt durch die Umsetzung eines Carboxylgruppen-terminierten Butadien/Acrylonitril-Copolymers (CTBN), insbesondere der Formel (III), wobei die Substituenten wie in Formel (II) definiert sind, mit einem vorstehend erläuterten Diglycidylether der Formel (I) in einem stöchiometrischen Überschuss des Diglycidylethers, d.h. dass das Verhältnis der Glycidylether-Gruppen zu den COOH-Gruppen ist größer gleich 2.

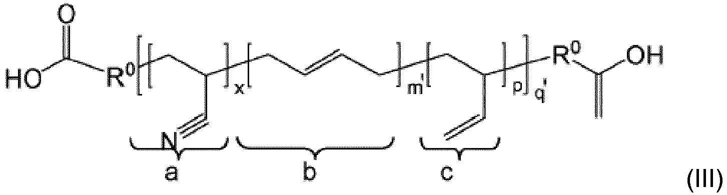

Der Anteil des oder der vorstehend beschriebenen zusätzlichen Schlagzähigkeitsmodifikatoren, der/die von dem Epoxid-terminierten Schlagzähigkeitsmodifikator im erfindungsgemäßen Flüssigkautschuk verschieden ist, beträgt z.B. 0 bis 45 Gew.-%, vorzugsweise 1 bis 45 Gew.-%, insbesondere 3 bis 35 Gew.-%, bezogen auf das Gewicht der gesamten Zusammensetzung.

Die Epoxidharzzusammensetzung kann selbstverständlich noch andere Bestandteile umfassen. Insbesondere sind dies Füllstoffe, Reaktivverdünner, wie Epoxidgruppentragende Reaktivverdünner, Katalysatoren, Stabilisatoren, insbesondere Hitze- und/oder Lichtstabilisatoren, Thixotropiermittel, Weichmacher, Lösungsmittel, mineralische oder organische Füllstoffe, Treibmittel, Farbstoffe und Pigmente, Korrosionsschutzmittel, Tenside, Entschäumer und Haftvermittler. Für diese Additive können alle in der Technik bekannten in den üblichen Mengen eingesetzt werden.

Bei den Füllstoffen handelt es sich z.B. bevorzugt um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff sind sowohl die organisch beschichteten als auch die unbeschichteten kommerziell erhältlichen und dem Fachmann bekannten Formen gemeint.

Vorteilhaft beträgt der Gesamtanteil des gesamten Füllstoffs 3 bis 50 Gewichts-%, vorzugsweise 5 bis 35 Gewichts-%, insbesondere 5 bis 25 Gewichts-%, bezogen auf das Gewicht der gesamten Zusammensetzung.

Bei den Reaktivverdünnern handelt es sich insbesondere um:
- Glycidylether von monofunktionellen gesättigten oder ungesättigten, verzweigten oder unverzweigten, zyklischen oder offenkettigen C₄-C₃₀-Alkoholen, insbesondere ausgewählt aus der Gruppe bestehend aus Butanolglycidylether, Hexanolglycidylether, 2-Ethylhexanolglycidylether, Allylglycidylether, Tetrahydrofurfuryl- und Furfurylglycidylether, Trimethoxysilylglycidylether.
- Glycidylether von difunktionellen gesättigten oder ungesättigten, verzweigten oder unverzweigten, zyklischen oder offenkettigen C₂-C₃₀-Alkoholen, insbesondere ausgewählt aus der Gruppe bestehend aus Ethylenglykol-, Butandiol-, Hexandiol-, Octandiolgylcidylether, Cyclohexandimethanoldigylcidylether und Neopentylglycoldiglycidylether.
- Glycidylether von tri- oder polyfunktionellen, gesättigten oder ungesättigten, verzweigten oder unverzweigten, zyklischen oder offenkettigen Alkoholen wie epoxidiertes Rhizinusöl, epoxidiertes Trimethylolpropan, epoxidiertes Pentaerythrol oder Polyglycidylether von aliphatischen Polyolen wie Sorbitol, Glycerin oder Trimethylolpropan.
- Glycidylether von Phenol- und Anilinverbindungen, insbesondere ausgewählt aus der Gruppe bestehend aus Phenylglycidylether, Kresylglycidylether, p-tert.-Butylphenylglycidylether, Nonylphenolglycidylether, 3-n-Pentadecenylglycidylether (aus Cashewnuss-Schalen-Öl), N, N-Diglycidylanilin und Triglycdiyl von p-Aminophenol.
- Epoxidierte Amine wie N, N-Diglycidylcyclohexylamin.
- Epoxidierte Mono- oder Dicarbonsäuren insbesondere ausgewählt aus der Gruppe bestehend aus Neodecansäureglycidylester, Methacrylsäureglycidylester, Benzoesäureglycidylester, Phthalsäure-, Tetra- und Hexahydrophthalsäurediglycidylester und Diglycidylester von dimeren Fettsäuren sowie Terephthalsäure- und Trimelitsäuregylcidylester.
- Epoxidierte di- oder trifunktionelle, nieder- bis hochmolekulare Polyetherpolyole, insbesondere Polyethylenglycoldiglycidylether oder Polypropyleneglycol-diglycidylether.

Besonders bevorzugt sind Hexandioldiglycidylether, Kresylglycidylether, p-tert.-Butylphenylglycidylether, Polypropylenglycoldiglycidylether und Polyethylenglycoldiglycidylether.

Vorteilhaft beträgt der Gesamtanteil des Reaktivverdünners 0,1 bis 20 Gewichts-%, vorzugsweise 1 bis 8 Gewichts-%, bezogen auf das Gewicht der gesamten Epoxidharzzusammensetzung.

Als Weichmacher eignen sich z.B. Phenolalkylsulfonsäureester oder Benzolsulfonsäure-N-butylamid, die als Mesamoll® bzw. Dellatol BBS von Bayer erhältlich sind. Als Stabilisatoren eignen sich z.B. gegebenenfalls substituierte Phenole, wie Butylhydroxytoluol (BHT) oder Wingstay® T (Elikem), sterisch gehinderte Amine oder N-Oxylverbindungen wie TEMPO (Evonik).

In einer besonderen Ausführungsform enthält die Epoxidharzzusammensetzung ferner mindestens ein physikalisches oder chemisches Treibmittel, insbesondere in einer Menge von 0,1 bis 3 Gewichts-%, bezogen auf das Gewicht der Zusammensetzung. Bevorzugte Treibmittel sind chemische Treibmittel, welche beim Erhitzen, insbesondere auf eine Temperatur von 100 bis 200 °C, ein Gas freisetzen. Es kann sich um exotherme Treibmittel handeln, wie z.B. Azoverbindungungen, Hydrazinderivate, Semicarbazide oder Tetrazole. Bevorzugt sind Azodicarbonamid und Oxybis(benzolsulfonylhydrazid), die bei der Zersetzung Energie freisetzen. Weiterhin geeignet sind auch endotherme Treibmittel, wie beispielsweise Natriumbicarbonat/ Citronensäure-Mischungen. Derartige chemische Treibmittel sind beispielsweise unter dem Namen Celogen® der Firma Chemtura erhältlich. Ebenfalls geeignet sind physikalische Treibmittel, die unter dem Handelsnamen Expancel® der Firma Akzo Nobel vertrieben werden. Expancel® und Celogen® sind besonders bevorzugt. Beispielhaft seien noch Zusammensetzungen und Anteile für einen bevorzugten heisshärtenden 1K Epoxidharz-Klebstoff, der den erfindungsgemäßen Schlagzähmodifikator enthält, aufgeführt. Die Prozentangaben beziehen sich auf das Gewicht.
A) 20 - 60% Epoxidharze (z.B. Flüssigharz, Festharz, epoxidierte Novolake usw.)
B) 0 - 15% Reaktivverdünner (z.B. Hexandioldiglycidylether)
C) 10 -60% des erfindungsgemäßen Schlagzähigkeitsmodifikators, vorzugsweise vollständig blockiert,
D) 0-10% eines Diisocyanats,
E) 0 - 40% CTBN-Derivat (z.B. CTBN-Derivate der Formel (II) wie CTBN-Epoxidharz-Addukte, z.B. Polydis Struktol von Schill+Seilacher)
F) 0 - 40% eines Core-Shell-Tougheners wie Kaneka MX-125 oder sonstige Kautschukpartikel als unreaktive Flexibilisatoren
G) 0-25% HAT-Paste (Addukt MDI und Monobutylamin, vgl. EP 1152019)
H) 1 - 10%, bevorzugt 2 - 7%, Härter und Katalysatoren
I) 0 - 40% organische oder mineralische Füllstoffe

Die einkomponentige Epoxidharzzusammensetzung, insbesondere ein Klebstoff, ist insbesondere hitzehärtend. Die Aushärtung erfolgt durch Erhitzen der Zusammensetzung auf eine Temperatur, welche über der Hitzeaktivierung des thermisch aktivierbaren Härters liegt. Diese Aushärtetemperatur ist vorzugsweise eine Temperatur im Bereich von 100 bis 220 °C, vorzugsweise 120 bis 200 °C. Bei einer zweikomponentigen Epoxidharzzusammensetzung erfolgt nach dem Mischen der ersten Komponente und der zweiten Komponente eine Reaktion, welches zum Aushärten der Zusammensetzung führt.

Die erfindungsgemäße Epoxidharzzusammensetzung eignet sich insbesondere zur Verwendung als Klebstoff, insbesondere als einkomponentiger Klebstoff, und wird bevorzugt zum Verkleben von mindestens zwei Substraten verwendet. Die Klebstoffe eignen sich insbesondere für Automobile oder An- oder Einbaumodule für Fahrzeuge. Ferner eignen sich die erfindungsgemäßen Zusammensetzungen auch für andere Anwendungsgebiete. Besonders zu erwähnen sind verwandte Anwendungen im Transportmittelbau wie Schiffe, Lastwagen, Busse oder Schienenfahrzeuge, im Bau von Gebrauchsgütern wie beispielsweise Waschmaschinen, aber auch im Bausektor, beispielsweise als versteifende Strukturklebstoffe. Es können mit einer erfindungsgemäßen Zusammensetzung neben Klebstoffen auch Dichtmassen oder Beschichtungen realisiert werden.

Bei den zu verklebenden oder beschichtenden Materialien handelt es sich bevorzugt um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Durch die Verwendung des erfindungsgemäßen Schlagzähigkeitsmodifikators in 1K oder 2K Epoxidharzzusammensetzungen, insbesondere Epoxidharzklebstoffen, als Schlagzähigkeitsmodifikator wird eine Zunahme der Zähigkeit im Vergleich zu der gleichen Epoxidharzzusammensetzung aber ohne den erfindungsgemäßen Schlagzähigkeitsmodifikator erreicht. Erstaunlicherweise wird insbesondere eine verbesserte Tieftemperatur-Schlagzähigkeit erreicht, z.B. bei einer Temperatur von -10°C oder weniger, insbesondere bei z.B. -30°C.

### Beispiele

Im Folgenden werden einige Beispiele aufgeführt, welche die Erfindung weiter veranschaulichen, den Umfang der Erfindung aber in keiner Weise beschränken sollen. Sofern nicht anders angegeben, beziehen sich alle Anteile und Prozentsätze auf das Gewicht.

Zur Bestimmung von nachstehend angegebenen Parametern wurden folgende Messverfahren verwendet.

### Bestimmung des Isocyanatgehaltes

Der Isocyanatgehalt wurde in Gew. % mittels einer Rücktitration mit im Überschuss eingesetztem Di-n-butylamin und 0,1 M Salzsäure bestimmt. Alle Bestimmungen wurden halbmanuell auf einem Mettler-Toledo Titrator des Typs DL50 Graphix mit automatischer potentiometrischer Endpunktbestimmung durchgeführt. Dazu wurden jeweils 600-800 mg der zu bestimmenden Probe unter Erwärmen in einer Mischung aus 10 ml Isopropanol und 40 ml Xylol gelöst und anschließend mit einer Lösung von Dibutylamin in Xylol umgesetzt. Überschüssiges Di-n-butylamin wurde mit 0,1M Salzsäure titriert und daraus der Isocyanatgehalt berechnet.

### Bestimmung der Viskosität

Viskositätsmessungen erfolgten auf einem Rheometer vom Typ MCR 101 des Herstellers Anton Paar rotatorisch unter Verwendung einer Platten-Platten Geometrie mit folgenden Parametern: 50 s⁻¹ Rotation, 0,2 mm Spalt, Platte-Platte-Abstand 25 mm.

Für die Herstellung von Schlagzähigkeitsmodifikatoren SM 1 bis SM6 wurden folgende Ausgangsprodukte verwendet:

| Ausgangsprodukte | Beschreibung | Lieferant |
|---|---|---|
| IPDI | Isophorondiisocyanat | Evonik |
| HDI | Hexamethylendiisocyanat | Sigma-Aldrich |
| BHT (lonol® CP) | Stabilisator, Butylhydroxytoluol | Evonik |
| Vestanat®HB 2640/100 | HDI-Biuret, NCO-Funktionalität 3-4 | Evonik |
| Bayhydur®304 | HDI-Isocyanurat, modifiziert, NCO-Funktionalität ca. 3,8 | Bayer |
| Bayhydur®3100 | HDI-Isocyanurat, modifiziert, NCO-Funktionalität ca. 3,2 | Bayer |
| Desmodur®N3600 | HDI-Isocyanurat, NCO-Funktionalität ca. 3,2 | Bayer |
| Terathane®2000 | Polytetramethylenetherglycol, Polymerisationsgrad ca. 27 (Mittel) | Invista B.V. |
| Dibutylzinndilaurat (DBTL) | Katalysator | Thorson |
| Cardolite®NC-700 | 3-Pentadecenylphenol (aus Cashewnuss-Schalen-Öl) | Cardolite Corporation |

### Vergleichsbeispiel 1: Schlagzähigkeitsmodifikator 1 (SM1)

300 g Terathane 2000 und 0,3 g BHT als Stabilisator wurden 1h unter minimalen Rühren auf einem Planetarmischer im Vakuum bei 90 °C entwässert. Anschließend wurden 67,23 g IPDI und 0,047 g DBTL zugegeben. Die Reaktion wurde 2 h unter Vakuum bei 90 °C bei mäßig starkem Rühren durchgeführt, um ein Isocyanat-terminiertes Polymer zu erhalten: Gemessener freier NCO-Gehalt: 3,32% (theoretischer NCO-Gehalt: 3,46%).

Zu dem erhaltenen NCO-terminierten Polymer wurden 104,46 g Cardolite NC-700 zugegeben. Die Mischung wurde mit 0,094 g DBTL versetzt und es wurde 5 Stunden im Vakuum bei 110°C unter eher starkem Rühren umgesetzt, um ein blockiertes Polymer zu erhalten. Zur Vervollständigung des Blockierungsgrades wurde das Polymer anschliessend in einem geschlossenen Behältnis über Nacht bei 70°C im Wärmeschrank ausgelagert. NCO-Gehalt (1 d): 0,19%
Viskosität (1 d): 167Pa*s bei 25°C, 36 Pa*s bei 50°C.

### Vergleichsbeispiel 2: Schlagzähigkeitsmodifikator 2 (SM2)

300 g Terathane 2000 und 0,3 g BHT als Stabilisator wurden 1h unter minimalem Rühren im Vakuum bei 90 °C entwässert. Anschließend wurden 50,87 g HDI und 0,045 g DBTL zugegeben. Die Reaktion wurde 2 h unter Vakuum bei 90 °C bei mäßig starkem Rühren durchgeführt, um ein Isocyanat-terminiertes Polymer zu erhalten: Gemessener freier NCO-Gehalt: 3,28% (theoretischer NCO-Gehalt: 3,62%).

Zu dem erhaltenen NCO-terminierten Polymer wurden 98,69 g Cardolite NC-700 zugegeben. Die Mischung wurde mit 0,090 g DBTL versetzt und es wurde 3 Stunden im Vakuum bei 110°C unter eher starkem Rühren umgesetzt, um ein blockiertes Polymer zu erhalten: Gemessener freier NCO-Gehalt (3 h): 0,01%.
Viskosität (1 d): 389 Pa*s bei 25°C, 53 Pa*s bei 50°C.

### Beispiel 1: Schlagzähigkeitsmodifikator 3 (SM3)

350 g Terathane 2000 und 0,3 g BHT als Stabilisator wurden 1h unter minimalem Rühren im Vakuum bei 90 °C entwässert. Anschließend wurden 58,83 g IPDI, 16,84 g Vestanat 2640HB/100 und 0,052 g DBTL zugegeben. Die Reaktion wurde 2 h unter Vakuum bei 90 °C bei mäßig starkem Rühren durchgeführt, um ein Isocyanat-terminiertes Polymer zu erhalten: Gemessener freier NCO-Gehalt: 2,46% (theoretischer NCO-Gehalt: 2,62%).

Zu dem erhaltenen NCO-terminierten Polymer wurden 89,69 g Cardolite NC-700 zugegeben. Die Mischung wurde mit 0,103 g DBTL versetzt und es wurde 5 Stunden im Vakuum bei 110°C unter eher starkem Rühren umgesetzt, um ein blockiertes Polymer zu erhalten. Zur Vervollständigung des Blockierungsgrades wurde das Polymer anschliessend in einem geschlossenen Behältnis über Nacht bei 70°C im Wärmeschrank ausgelagert. NCO-Gehalt (1 d) 0,16%
Viskosität (1 d): 939 Pa*s bei 25°C, 278 Pa*s bei 50°C.

### Beispiel 2: Schlagzähigkeitsmodifikator 4 (SM4)

350 g Terathane 2000 und 0,3 g BHT als Stabilisator wurden 1h unter minimalen Rühren im Vakuum bei 90 °C entwässert. Anschließend wurden 58,83 g IPDI, 20,29 g Bayhydur 304 und 0,052 g DBTL zugegeben. Die Reaktion wurde 2 h unter Vakuum bei 90 °C bei mäßig starkem Rühren durchgeführt, um ein Isocyanat-terminiertes Polymer zu erhalten: Gemessener freier NCO-Gehalt: 2,44% (theoretischer NCO-Gehalt: 2,59%).

Zu dem erhaltenen NCO-terminierten Polymer wurden 89,79 g Cardolite NC-700 zugegeben. Die Mischung wurde mit 0,104 g DBTL versetzt und es wurde 5 Stunden im Vakuum bei 110°C unter eher starkem Rühren umgesetzt, um ein blockiertes Polymer zu erhalten. Zur Vervollständigung des Blockierungsgrades wurde das Polymer anschliessend in einem geschlossenen Behältnis über Nacht bei 70°C im Wärmeschrank ausgelagert. NCO-Gehalt (1d nach Herstellung): 0.14%
Viskosität (1 d): 978 Pa*s bei 25°C, 300 Pa*s bei 50°C.

### Beispiel 3: Schlagzähigkeitsmodifikator 5 (SM5)

300 g Terathane 2000 und 0,3 g BHT als Stabilisator wurden 1h unter minimalem Rühren im Vakuum bei 90 °C entwässert. Anschließend wurden 50,51 g IPDI, 36,51 g Bayhydur 3100 und 0,049 g DBTL zugegeben. Die Reaktion wurde 2 h unter Vakuum bei 90 °C bei mäßig starkem Rühren durchgeführt, um ein Isocyanat-terminiertes Polymer zu erhalten: Gemessener freier NCO-Gehalt: 2,97% (theoretischer NCO-Gehalt: 3,29%).

Zu dem erhaltenen NCO-terminierten Polymer wurden 98,48 g Cardolite NC-700 zugegeben. Die Mischung wurde mit 0,097 g DBTL versetzt und es wurde 3 Stunden im Vakuum bei 110°C unter eher starkem Rühren umgesetzt, um ein blockiertes Polymer zu erhalten. NCO-Gehalt (3h): 0,01%
Viskosität (1 d): 1160 Pa*s bei 25°C, 343 Pa*s bei 50°C.

### Beispiel 4: Schlagzähigkeitsmodifikator 6 (SM6)

300 g Terathane 2000 und 0,3 g BHT als Stabilisator wurden 1h unter minimalem Rühren im Vakuum bei 90 °C entwässert. Anschließend wurden 50,51 g IPDI, 27,67 g Desmodur N3600 und 0,048 g DBTL zugegeben. Die Reaktion wurde 2 h unter Vakuum bei 90 °C bei mäßig starkem Rühren durchgeführt, um ein Isocyanat-terminiertes Polymer zu erhalten: Gemessener freier NCO-Gehalt: 3,07% (theoretischer NCO-Gehalt: 3,36%).

Zu dem erhaltenen NCO-terminierten Polymer wurden 99,52 g Cardolite NC-700 zugegeben. Die Mischung wurde mit 0,096 g DBTL versetzt und es wurde 5 Stunden im Vakuum bei 110°C unter eher starkem Rühren umgesetzt, um ein blockiertes Polymer zu erhalten. Zur Vervollständigung des Blockierungsgrades wurde das Polymer anschliessend in einem geschlossenen Behältnis über Nacht bei 70°C im Wärmeschrank ausgelagert. NCO-Gehalt (1 d): 0,15%
Viskosität (1 d): 1210 Pa*s bei 25°C, 373 Pa*s bei 50°C.

In den Beispielen 3 und 4 (SM5 und SM6) und den Vergleichsbeispielen 1 bis 2 (SM1 und SM2) war das molare Verhältnis von Hydroxylgruppen des PTMEG zu den Isocyanatgruppen des oder der Polyisocyanate 1 zu 2. In den Beispielen 1 und 2 (SM3 und SM4) war das molare Verhältnis von Hydroxylgruppen des PTMEG zu den Isocyanatgruppen des oder der Polyisocyanate 1 zu 1,75.

Das molare Verhältnis der OH-Gruppen des Cardolite NC-700 zu den Isocyanatgruppen des Isocyanat terminierten Polymers betrug in den Beispielen 1 bis 4 und den Vergleichsbeispielen 1 und 2 etwa 1,2 zu 1.

In den Beispielen 1 und 2 war das molare Verhältnis von Isocyanatgruppen des Diisocyanats zu den Isocyanatgruppen des Polyisocyanats mit 2,5 oder mehr Isocyanatgruppen ungefähr 6 zu 1. In den Beispielen 3 und 4 war das molare Verhältnis von Isocyanatgruppen des Diisocyanats zu den Isocyanatgruppen des Polyisocyanats mit 2,5 oder mehr Isocyanatgruppen ungefähr 3 zu 1.

### Beispiele 5 bis 8 und Vergleichsbeispiele 3 und 4

Die in den Beispielen 1 bis 4 und den Vergleichsbeispielen 1 bis 2 hergestellten Schlagzähigkeitsmodifikatoren SM1 bis SM6 wurden jeweils zur Herstellung von Klebstoffen verwendet. Die Bestandteile und Anteile der Klebstoffe sind nachfolgend aufgeführt, wobei die Schlagzähigkeitsmodifikatoren SM3 bis SM6 jeweils zur Herstellung der Beispiele 5 bis 8 und die Schlagzähigkeitsmodifikatoren SM1 und SM2 jeweils zur Herstellung der Vergleichsbeispiele 3 und 4 eingesetzt wurden.

| Rohstoff | Gew.-Teile | | Lieferant |
|---|---|---|---|
| D.E.R 331 | 45,0 | Bisphenol-A-Epoxidharz | Dow |
| PolyPox R7 | 3,0 | Epoxy-Reaktivverdünner | Dow |
| Toughener | 15,0 | Schlagzähigkeitsmodifikator (je einer von SM1 bis SM6) | |
| Dyhard 100SF | 4,1 | Härter | Alzchem |
| Urone accelerator | 0,2 | Härtungsbeschleuniger | Alzchem |
| Omyacarb 5GU | 25,0 | Füllstoff | Omya |
| Precal 30S | 5,0 | Trockenmittel | Kreidewerke Dammann |
| HDK H18 | 3,0 | Thixotropiermittel | Wacker |

Die jeweiligen Klebstoffe wurden in einer Ansatzgrösse von 350g auf einem Planetarmischer gemischt. Hierzu wurden die oben genannten Inhaltstoffe in einer 1,5L Mischbüchse vorgelegt und bei 80°C unter Vakuum bei 150 U/min gemischt und anschliessend in Kartuschen abgefüllt.

In Tabelle 1 sind die für die jeweiligen Schlagzähigkeitsmodifikatoren eingesetzten Polyol- und Polyisocyanat-Komponenten zur Veranschaulichung noch einmal aufgeführt. Die Äquivalenzangaben zu den Isocyanatgruppen beziehen sich dabei auf das Verhältnis zu 1 Äquivalent Hydroxylgruppen des PTMEG.

Unmittelbar nach Mischen der Klebstoffformulierung wurden deren Eigenschaften gemäß der nachfolgenden Prüfmethoden bestimmt. Die Ergebnisse sind ebenfalls in Tabelle 1 angegeben.

**Tabelle 1**

| **Klebstoff** | | **Vgl.bsp. 3** | **Vgl.bsp. 4** | **Bsp. 5** | **Bsp. 6** | **Bsp. 7** | **Bsp. 8** |
|---|---|---|---|---|---|---|---|
| Toughener | | SM1 | SM2 | SM3 | SM4 | SM5 | SM6 |
| Polyol | | Terathane 2000 | Terathane 2000 | Terathane 2000 | Terathane 2000 | Terathane 2000 | Terathane 2000 |
| Isocyanat | | IPDI (2,0 eq) | HDI (2,0 eq) | IPDI(1,5 eq), Vestanat HB2640/100 (0,25 eq) | IPDI (1,5 eq), Bayhydur 304 (0,25 eq) | IPDI (1,5 eq), Bayhydur 3100 (0,5 eq) | IPDI (1,5 eq), Desmodur N3600 (0,5 eq) |
| Bruchdehnung | [%] | 2 | 6 | 3 | 7 | 3 | 6 |
| E-Modul (0.05-0.025%) | [MPa] | 1890 | 2270 | 2270 | 2090 | 1920 | 1790 |
| LSS | | | | | | | |
| Standard | [MPa] | 33,2 | 33,5 | 29,8 | 33,0 | 34,9 | 36,1 |
| Unterhärtung | [MPa] | 21,6 | 21,8 | 26,5 | 25,5 | 33,3 | 33,8 |
| Überhärtung | [MPa] | 17,4 | 17,3 | 19,1 | 22,6 | 33,1 | 30,5 |
| Winkelschälfestigkeit | [N/mm] | 4,5 | 3,0 | 5,4 | 5,0 | 7,6 | 6,9 |
| Schlagschälfestigkeit | [N/mm] | | | | | | |
| +23°C | | 13,2±1,6 | 9,4±0,2 | 22,3±0,8 | 19,4±0,8 | 29,6±1,0 | 26,6±0,8 |
| -30°C | | 6,0±0,8 | 6,3±1,1 | 14,9±0,44 | 13,8±0,1 | 17,7±0,3 | 19,4±0,7 |
| Viskosität | [Pa·s] | | | | | | |
| 25°C | | 220 | 225 | 331 | 330 | 312 | 329 |
| 50°C | | 84 | 79 | 89 | 76 | 72 | 72 |

### Zugfestigkeit, Bruchdehnung und E-Moduls (DIN EN ISO 527)

Eine Klebstoffprobe wurde zwischen zwei Teflonpapieren auf eine Schichtdicke von 2mm verpresst. Nach 30 min Aushärtung bei 180°C wurden die Teflonpapiere entfernt und die Probekörper nach DIN-Norm Zustand ausgestanzt. Die Prüfkörper wurden unter Normklima mit einer Zuggeschwindigkeit von 2 mm/min gemessen. Die Zugfestigkeit, Bruchdehnung und das E-Modul 0,05-0,25% wurden gemäss DIN EN ISO 527 bestimmt.

### Zugscherfestigkeit (LSS) (DIN EN 1465)

Gereinigte und mit Anticorit PL 3802-39S rückbeölte Prüfbleche à 100 x 25 mm von DC04 EG Stahl (Dicke 0.8mm) wurden auf einer Klebfläche von 20 x 30mm mit Glaskugeln als Abstandshalter in einer Schichtdicke von 0.3 mm mit den beschriebenen Klebstoffzusammensetzungen verklebt und unter den angegebenen Härtungsbedingungen ausgehärtet.

Härtungsbedingungen: a) 35 min bei 175°C Offentemperatur (Standard), b) 15 min bei 160°C Ofentemperatur (Unterhärtung), c) 30 min bei 210°C Offentemperatur (Überhärtung). Die Zugscherfestigkeit wurde auf einer Zugmaschine bei einer Zuggeschwindigkeit von 10mm/min in einer 5-fach Bestimmung gemäss DIN EN 1465 bestimmt

### Winkelschälfestigkeit (DIN 53281)

Es wurden Prüfbleche a 130 x 25 mm aus DC-04 EG Stahl (Dicke 0.8mm) präpariert. Prüfbleche wurden auf einer Höhe von 30 mmm mit einer geeigneten Stanzmaschine abgewickelt (90°). Die gereinigten und mit Anticorit PL 3802-39S rückbeölten Flächen von 100 x 25 mm wurden mit Glaskugeln als Abstandshalter in einer Schichtdicke von 0.3 mm mit den beschriebenen Klebstoffzusammensetzungen verklebt und unter Standardbedingungen (35 min, 175°C Ofentemperatur) ausgehärtet. Die Winkelschälfestigkeit wurde auf einer Zugmaschine mit einer Zuggeschwindigkeit von 10 mm/min in einer 3-fach Bestimmung als Schälkraft in N/mm im Bereich des Traversenweges von 1/6-bis 5/6 Weglänge bestimmt.

### Schlagschälfestigkeit (gemäss SO 11343)

Die Probenkörper wurden mit der beschriebenen Beispiel-Klebstoff-zusammensetzung und DC04 EG Stahl mit dem Mass 90 x 20 x 0,8mm hergestellt. Dabei betrug die Klebfläche 20 x 30mm bei einer Schichtdicke von 0,3mm und Glaskugeln als Abstandshalter. Die Messung der Schlagschälfestigkeit erfolgte jeweils bei den angegebenen Temperaturen als Dreifachbestimmung auf einem Zwick 450 Schlagpendel. Als Schlagschälfestigkeit, wird die gemittelte Kraft in N/mm unter der Messkurve von 25% bis 90% gemäss ISO11343 angegeben.

### Viskosität

Viskositätsmessungen an den Klebstoffen erfolgten 1d nach Herstellung auf einem Rheometer vom Typ MCR 101 des Herstellers Anton Paar rotatorisch unter Verwendung einer Platten-Platten Geometrie bei einer Temperatur von 25°C bzw. 50°C mit folgenden Parametern: 5 Hz, 1 mm Spalt, Platte-Platte-Abstand 25 mm, 1% Deformation.

## Patentansprüche

1. Schlagzähigkeitsmodifikator, welcher ein Isocyanat-terminiertes Polymer ist, dessen Isocyanatgruppen durch Umsetzung mit einem Blockierungsmittel teilweise oder vollständig blockiert sind, wobei
das Isocyanat-terminierte Polymer ein Reaktionsprodukt von
a) einem oder mehreren Polyolen umfassend Polytetramethylenetherglycol in einem Anteil von mindestens 95 Gew.-%, bezogen auf das Gesamtgewicht der Polyole, und
b) zwei oder mehr Polyisocyanaten, die mindestens ein Diisocyanat und mindestens ein Polyisocyanat mit einer mittleren Isocyanatfunktionalität von 2,5 oder mehr umfassen,
ist, wobei das molare Verhältnis von Isocyanatgruppen des oder der Diisocyanate zu Isocyanatgruppen des oder der Polyisocyanate mit einer mittleren Isocyanatfunktionalität von 2,5 oder mehr im Bereich von 2 zu 1 bis 20 zu 1 liegt.

2. Schlagzähigkeitsmodifikator nach Anspruch 1, wobei das molare Verhältnis von Isocyanatgruppen des oder der Diisocyanate zu Isocyanatgruppen des oder der Polyisocyanate mit einer mittleren Isocyanatfunktionalität von 2,5 oder mehr im Bereich von 2,5 zu 1 bis 10 zu 1 liegt.

3. Schlagzähigkeitsmodifikator nach Anspruch 1 oder Anspruch 2, wobei das Diisocyanat ein aliphatisches Diisocyanat ist, bevorzugt ausgewählt aus Hexamethylendiisocyanat (HDI) oder Isophorondiisocyanat (IPDI).

4. Schlagzähigkeitsmodifikator nach irgendeinem vorhergehenden Anspruch, wobei das Polyisocyanat mit einer mittleren Isocyanatfunktionalität von 2,5 oder mehr ausgewählt ist aus Isocyanuraten, Biureten, Iminooxadiazinen oder Allophanaten von Diisocyanaten, vorzugsweise von HDI, IPDI und/oder TDI, sowie TDI-Oligomeren, wobei das Polyisocyanat mit einer mittleren Isocyanatfunktionalität von 2,5 oder mehr bevorzugt aus Isocyanuraten von HDI oder IPDI oder Biureten von HDI oder IPDI ausgewählt ist.

5. Schlagzähigkeitsmodifikator nach irgendeinem vorhergehenden Anspruch, wobei das Polytetramethylenetherglycol ein mittleres Molekulargewicht im Bereich von 1000 bis 3000 g/mol, bevorzugt von 1500 bis 3000 g/mol, aufweist.

6. Schlagzähigkeitsmodifikator nach irgendeinem vorhergehenden Anspruch, wobei bezogen auf das oder die Polyole und die Polyisocyanate das molare Verhältnis von Isocyanatgruppen zu Hydroxygruppen im Bereich von 3 zu 1 bis 3 zu 2, vorzugsweise nahe 2 zu 1, liegt.

7. Schlagzähigkeitsmodifikator nach irgendeinem vorhergehenden Anspruch, wobei mindestens 80%, bevorzugt mindestens 96%, der Isocyanatgruppen des Isocyanat-terminierten Polymers blockiert sind.

8. Schlagzähigkeitsmodifikator nach irgendeinem vorhergehenden Anspruch, wobei das Blockierungsmittel ausgewählt ist aus einer Verbindung, die mindestens eine aliphatische oder aromatische Hydroxylgruppe aufweist, einer Verbindung, die mindestens eine sekundäre Aminogruppe aufweist, einer Verbindung, die mindestens eine Oximgruppe aufweist, oder einer Verbindung, die mindestens eine CH-acide Gruppe aufweist, wobei eine Verbindung mit mindestens einer aliphatischen oder aromatischen Hydroxylgruppe bevorzugt ist.

9. Schlagzähigkeitsmodifikator nach irgendeinem vorhergehenden Anspruch, wobei das Blockierungsmittel aus Alkoholen, Phenolen oder Bisphenolen ausgewählt ist, vorzugsweise ausgewählt aus Phenol, Cardanol (3-Pentadecenyl-phenol (aus Cashewnuss-Schalen-ÖI)), Nonylphenol, *m-Methoxyphenol, p*-Methoxyphenol,mit Styrol oder Dicyclopentadien umgesetzte Phenole, Bisphenol A und Bisphenol F.

10. Verfahren zur Herstellung eines Schlagzähigkeitsmodifikators, umfassend
A) die Umsetzung von
a) einem oder mehreren Polyolen umfassend Polytetramethylenetherglycol in einem Anteil von mindestens 95 Gew.-%, bezogen auf das Gesamtgewicht der Polyole, und
b) zwei oder mehr Polyisocyanaten, die mindestens ein Diisocyanat und mindestens ein Polyisocyanat mit einer mittleren Isocyanatfunktionalität von 2,5 oder mehr umfassen,
gegebenenfalls in Anwesenheit eines Katalysators, wobei das molare Verhältnis von Isocyanatgruppen des oder der Diisocyanate zu Isocyanatgruppen des oder der Polyisocyanate mit einer mittleren Isocyanatfunktionalität von 2,5 oder mehr im Bereich 2 zu 1 bis 20 zu 1, bevorzugt 2,5 zu 1 bis 10 zu 1 liegt, unter Bildung eines Isocyanat-terminierten Polymers, und
B) Umsetzen des Isocyanat-terminierten Polymers mit einem Blockierungsmittel, gegebenenfalls in Anwesenheit eines Katalysators, um die Isocyanatgruppen des Isocyanat-terminierten Polymers teilweise oder vollständig zu blockieren.

11. Verfahren nach Anspruch 10, wobei der Schlagzähigkeitsmodifikator ein Schlagzähigkeitsmodifikator nach irgendeinem der Ansprüche 1 bis 9 ist.

12. Verfahren nach Anspruch 10 oder Anspruch 11, wobei in Schritt B) das molare Verhältnis von Isocyanatgruppen des Isocyanat-terminierten Polymers zu H-aciden Gruppen, insbesondere Hydroxylgruppen, des Blockierungsmittels im Bereich von 1 zu 1 bis 2 zu 3 liegt.

13. Verwendung eines Schlagzähigkeitsmodifikators nach irgendeinem der Ansprüche 1 bis 9 in einer einkomponentigen oder zweikomponentigen Epoxidharzzusammensetzung, bevorzugt in einem Epoxidharzklebstoff, als Schlagzähigkeitsmodifikator, insbesondere zur Verbesserung der Tieftemperaturschlagzähigkeit.

14. Einkomponentige oder zweikomponentige Epoxidharzzusammensetzung, insbesondere Epoxidharzklebstoff, umfassend
a) mindestens ein Epoxidharz,
b) mindestens einen Härter für Epoxidharze und
c) einen Schlagzähigkeitsmodifikator nach irgendeinem der Ansprüche 1 bis 9,
wobei die Epoxidharzzusammensetzung bevorzugt ein einkomponentiger Epoxidharzklebstoff ist.

15. Epoxidharzzusammensetzung nach Anspruch 14, in der der Anteil des Schlagzähigkeitsmodifikators in einem Bereich von 5 bis 60 Gew.-%, bevorzugt 10 bis 25 Gew.-%, liegt.

## Claims

1. Impact modifier which is an isocyanate-terminated polymer, the isocyanate groups of which have been fully or partly blocked by reaction with a blocking agent, wherein
the isocyanate-terminated polymer is a reaction product of
a) one or more polyols comprising polytetramethylene ether glycol in a proportion of at least 95% by weight, based on the total weight of the polyols, and
b) two or more polyisocyanates including at least one diisocyanate and at least one polyisocyanate having a mean isocyanate functionality of 2.5 or more,
wherein the molar ratio of isocyanate groups in the diisocyanate(s) to isocyanate groups in the polyisocyanate(s) having a mean isocyanate functionality of 2.5 or more is in the range from 2:1 to 20:1.

2. Impact modifier according to Claim 1, wherein the molar ratio of isocyanate groups in the diisocyanate(s) to isocyanate groups in the polyisocyanate(s) having a mean isocyanate functionality of 2.5 or more is in the range from 2.5:1 to 10:1.

3. Impact modifier according to Claim 1 or Claim 2, wherein the diisocyanate is an aliphatic diisocyanate, preferably selected from hexamethylene diisocyanate (HDI) and isophorone diisocyanate (IPDI).

4. Impact modifier according to any preceding claim, wherein the polyisocyanate having a mean isocyanate functionality of 2.5 or more is selected from isocyanurates, biurets, iminooxadiazines and allophanates of diisocyanates, preferably of HDI, IPDI and/or TDI, and TDI oligomers, wherein the polyisocyanate having a mean isocyanate functionality of 2.5 or more is preferably selected from isocyanurates of HDI or IPDI or biurets of HDI or IPDI.

5. Impact modifier according to any preceding claim, wherein the polytetramethylene ether glycol has a mean molecular weight in the range from 1000 to 3000 g/mol, preferably from 1500 to 3000 g/mol.

6. Impact modifier according to any preceding claim, wherein, based on the polyol(s) and the polyisocyanates, the molar ratio of isocyanate groups to hydroxyl groups is in the range from 3:1 to 3:2, preferably close to 2:1.

7. Impact modifier according to any preceding claim, wherein at least 80%, preferably at least 96%, of the isocyanate groups in the isocyanate-terminated polymer have been blocked.

8. Impact modifier according to any preceding claim, wherein the blocking agent is selected from a compound having at least one aliphatic or aromatic hydroxyl group, a compound having at least one secondary amino group, a compound having at least one oxime group, and a compound having at least one CH-acidic group, preference being given to a compound having at least one aliphatic or aromatic hydroxyl group.

9. Impact modifier according to any preceding claim, wherein the blocking agent is selected from alcohols, phenols and bisphenols, preferably selected from phenol, cardanol (3-pentadecenylphenol (from cashewnut shell oil)), nonylphenol, m-methoxyphenol, p-methoxyphenol, phenols that have been reacted with styrene or dicyclopentadiene, bisphenol A and bisphenol F.

10. Process for preparing an impact modifier, comprising
A) the reaction of
a) one or more polyols comprising polytetramethylene ether glycol in a proportion of at least 95% by weight, based on the total weight of the polyols, and
b) two or more polyisocyanates including at least one diisocyanate and at least one polyisocyanate having a mean isocyanate functionality of 2.5 or more,
optionally in the presence of a catalyst, where the molar ratio of isocyanate groups in the diisocyanate(s) to isocyanate groups in the polyisocyanate(s) having a mean isocyanate functionality of 2.5 or more is in the range of 2:1 to 20:1, preferably 2.5:1 to 10:1, to form an isocyanate-terminated polymer, and
B) reacting the isocyanate-terminated polymer with a blocking agent optionally in the presence of a catalyst, in order to partly or fully block the isocyanate groups of the isocyanate-terminated polymer.

11. Process according to Claim 10, wherein the impact modifier is an impact modifier according to any of Claims 1 to 9.

12. Process according to Claim 10 or Claim 11, wherein, in step B), the molar ratio of isocyanate groups in the isocyanate-terminated polymer to H-acidic groups, especially hydroxyl groups, in the blocking agent is in the range from 1:1 to 2:3.

13. Use of an impact modifier according to any of Claims 1 to 9 in a one-component or two-component epoxy resin composition, preferably in an epoxy resin adhesive, as impact modifier, especially for improving low-temperature impact resistance.

14. One-component or two-component epoxy resin composition, especially epoxy resin adhesive, comprising
a) at least one epoxy resin,
b) at least one hardener for epoxy resins and
c) an impact modifier according to any of Claims 1 to 9,
wherein the epoxy resin composition is preferably a one-component epoxy resin adhesive.

15. Epoxy resin composition according to Claim 14, in which the proportion of the impact modifier is within a range from 5% to 60% by weight, preferably 10% to 25% by weight.

## Revendications

1. Modificateur de la résistance aux impacts, qui est un polymère à terminaison isocyanate, dont les groupes isocyanate sont bloqués en partie ou en totalité par mise en réaction avec un agent de blocage,
le polymère à terminaison isocyanate étant un produit de réaction de
a) un ou plusieurs polyols comprenant du polytétraméthylène-éther-glycol en une proportion d'au moins 95 % en poids, par rapport au poids total des polyols, et
b) deux polyisocyanates ou plus, qui comprennent au moins un diisocyanate et au moins un polyisocyanate ayant une fonctionnalité isocyanate moyenne de 2,5 ou plus,
le rapport molaire entre les groupes isocyanate du ou des diisocyanates et les groupes isocyanate du ou des polyisocyanates ayant une fonctionnalité isocyanate moyenne de 2,5 ou plus se situant dans la plage allant de 2 sur 1 à 20 sur 1.

2. Modificateur de la résistance aux impacts selon la revendication 1, dans lequel le rapport molaire entre les groupes isocyanate du ou des diisocyanates et les groupes isocyanate du ou des polyisocyanates ayant une fonctionnalité isocyanate moyenne de 2,5 ou plus se situe dans la plage allant de 2,5 sur 1 à 10 sur 1.

3. Modificateur de la résistance aux impacts selon la revendication 1 ou la revendication 2, dans lequel le diisocyanate est un diisocyanate aliphatique, de préférence choisi parmi le diisocyanate d'hexaméthylène (HDI) ou le diisocyanate d'isophorone (IPDI).

4. Modificateur de la résistance aux impacts selon l'une quelconque des revendications précédentes, dans lequel le polyisocyanate ayant une fonctionnalité isocyanate moyenne de 2,5 ou plus est choisi parmi les isocyanurates, les biurets, les iminooxadiazines ou les allophanates de diisocyanates, de préférence d'HDI, d'IPDI et/ou de TDI, ainsi que les oligomères de TDI, le polyisocyanate ayant fonctionnalité isocyanate moyenne de 2,5 ou plus étant de préférence choisi parmi les isocyanurates d'HDI ou d'IPDI ou les biurets d'HDI ou d'IPDI.

5. Modificateur de la résistance aux impacts selon l'une quelconque des revendications précédentes, dans lequel le polytétraméthylène-éther-glycol présente un poids moléculaire moyen dans la plage allant de 1 000 à 3 000 g/mol, de préférence de 1 500 à 3 000 g/mol.

6. Modificateur de la résistance aux impacts selon l'une quelconque des revendications précédentes, dans lequel, par rapport au ou aux polyols et aux polyisocyanates, le rapport molaire entre les groupes isocyanate et les groupes hydroxy se situe dans la plage allant de 3 sur 1 à 3 sur 2, de préférence à environ 2 sur 1.

7. Modificateur de la résistance aux impacts selon l'une quelconque des revendications précédentes, dans lequel au moins 80 %, de préférence au moins 96 %, des groupes isocyanate du polymère à terminaison isocyanate sont bloqués.

8. Modificateur de la résistance aux impacts selon l'une quelconque des revendications précédentes, dans lequel l'agent de blocage est choisi parmi un composé qui comprend au moins un groupe hydroxyle aliphatique ou aromatique, un composé qui comprend au moins un groupe amino secondaire, un composé qui comprend au moins un groupe oxime, ou un composé qui comprend au moins un groupe CH acide, un composé qui comprend au moins un groupe hydroxyle aliphatique ou aromatique étant préféré.

9. Modificateur de la résistance aux impacts selon l'une quelconque des revendications précédentes, dans lequel l'agent de blocage est choisi parmi les alcools, les phénols ou les bisphénols, de préférence est choisi parmi le phénol, le cardanol (3-pentadécényl-phénol (issu d'huile de coques de noix de cajou)), le nonylphénol, le *m*-méthoxyphénol, le *p*-méthoxyphénol, les phénols ayant réagi avec du styrène ou du dicyclopentadiène, le bisphénol A et le bisphénol F.

10. Procédé de fabrication d'un modificateur de la résistance aux impacts, comprenant :
A) la mise en réaction de
a) un ou plusieurs polyols comprenant du polytétraméthylène-éther-glycol en une proportion d'au moins 95 % en poids, par rapport au poids total des polyols, et
b) deux polyisocyanates ou plus, qui comprennent au moins un diisocyanate et au moins un polyisocyanate ayant une fonctionnalité isocyanate moyenne de 2,5 ou plus, éventuellement en présence d'un catalyseur, le rapport molaire entre les groupes isocyanate du ou des diisocyanates et les groupes isocyanate du ou des polyisocyanates ayant une fonctionnalité isocyanate moyenne de 2,5 ou plus se situant dans la plage allant de 2 sur 1 à 20 sur 1, de préférence de 2,5 sur 1 à 10 sur 1, pour former un polymère à terminaison isocyanate, et
B) la mise en réaction du polymère à terminaison isocyanate avec un agent de blocage, éventuellement en présence d'un catalyseur, afin de bloquer en partie ou en totalité les groupes isocyanate du polymère à terminaison isocyanate.

11. Procédé selon la revendication 10, dans lequel le modificateur de la résistance aux impacts est un modificateur de la résistance aux impacts selon l'une quelconque des revendications 1 à 9.

12. Procédé selon la revendication 10 ou la revendication 11, dans lequel, à l'étape B), le rapport molaire entre les groupes isocyanate du polymère à terminaison isocyanate et les groupes H acides, notamment les groupes hydroxyle, de l'agent de blocage se situe dans la plage allant de 1 sur 1 à 2 sur 3.

13. Utilisation d'un modificateur de la résistance aux impacts selon l'une quelconque des revendications 1 à 9 dans une composition de résine époxyde monocomposante ou bicomposante, de préférence dans un adhésif à base de résine époxyde, en tant que modificateur de la résistance aux impacts, notamment pour améliorer la résistance aux impacts à basse température.

14. Composition de résine époxyde monocomposante ou bicomposante, notamment adhésif à base de résine époxyde, comprenant :
a) au moins une résine époxyde,
b) au moins un agent de durcissement pour résines époxyde, et
c) un modificateur de la résistance aux impacts selon l'une quelconque des revendications 1 à 9,
la composition de résine époxyde étant de préférence un adhésif à base de résine époxyde monocomposant.

15. Composition de résine époxyde selon la revendication 14, dans laquelle la proportion du modificateur de la résistance aux impacts se situe dans une plage allant de 5 à 60 % en poids, de préférence de 10 à 25 % en poids.
